# EUROPÄISCHE PATENTSCHRIFT

(11) **EP 3 704 479 B1**
(45) Veröffentlichungstag und Bekanntmachung des Hinweises auf die Patenterteilung: **22.01.2025**
(21) Anmeldenummer: 18801048.2
(22) Anmeldetag: 26.10.2018
(51) Int. Cl.: G01N 30/20

(54) **INJEKTOR MIT FLUIDZUFÜHRUNG UND MOBILPHASENABFÜHRUNG**
INJECTOR WITH FLUID SUPPLY AND MOBILE PHASE DISCHARGE
INJECTEUR COMPRENANT UNE ALIMENTATION EN FLUIDE ET UNE ÉVACUATION DE PHASE MOBILE

(30) Priorität: 30.10.2017 DE 102017125486
(43) Veröffentlichungstag der Anmeldung: 09.09.2020
(73) Patentinhaber: Agilent Technologies, Inc., Santa Clara, CA 95051 (US)
(72) Erfinder: ORTMANN, Thomas, 76337 Waldbronn (DE); SHOYKHET, Konstantin, 76337 Waldbronn (DE)
(74) Vertreter: Dilg, Haeusler, Schindelmann Patentanwaltsgesellschaft mbH
(86) Internationale Anmeldenummer: PCT/IB2018/058383
(87) Internationale Veröffentlichungsnummer: WO 2019/087027

(56) Entgegenhaltungen:
- DE-U1- 202016 100 451
- US-A1- 2004 251 203
- US-A1- 2009 145 205
- US-A1- 2015 316 516

## Beschreibung

### TECHNISCHER HINTERGRUND

Die vorliegende Erfindung betrifft einen Injektor zum Injizieren einer fluidischen Probe, welche zu analysierende Materie enthält, in eine mobile Phase in einem Haupt-Flusspfad eines Probentrenngeräts, ein Probentrenngerät und ein Verfahren.

In einer HPLC wird typischerweise eine Flüssigkeit (mobile Phase) bei einer sehr genau kontrollierten Flussrate (zum Beispiel im Bereich von Mikrolitern bis Millilitern pro Minute) und bei einem hohen Druck (typischerweise 20 bis 1000 bar und darüber hinausgehend, derzeit bis zu 2000 bar), bei dem die Kompressibilität der Flüssigkeit spürbar ist, durch eine stationäre Phase (zum Beispiel eine chromatographische Säule) bewegt, um einzelne Komponenten einer in die mobile Phase eingebrachten Probenflüssigkeit voneinander zu trennen. Ein solches HPLC-System ist zum Beispiel aus der EP 0,309,596 B1 derselben Anmelderin, Agilent Technologies, Inc., bekannt.

Für Flüssigkeitschromatographie ist es erforderlich, eine zu untersuchende fluidische Probe in das System einzuleiten. Solche Systeme zum Einleiten (auch bezeichnet als Injizieren oder Einführen) einer fluidischen Probe sind aus US 4,939,943, US 3,916,692, US 3,376,694 und US 6,893,569 bekannt.

Im Unterschied zu herkömmlichen Injektoren wird bei einem als "Feed Injection" bezeichneten Prinzip ein Flusspfad zwischen einem Fluidantrieb und einer Probentrenneinrichtung ununterbrochen weiterbetrieben, wenn zum Beispiel an einem fluidischen T-Punkt eine fluidische Probe eingebracht wird. Beispiele für Injektoren gemäß dem "Feed Injection"-Prinzip sind in US 2015/0316516 A1 und US 2015/0226710 A1 beschrieben.

Allerdings kann der Prozess des Einführens der fluidischen Probe in den Flusspfad zwischen Fluidantrieb und Probentrenneinrichtung gemäß dem "Feed Injection"-Prinzip zu Artefakten führen, zum Beispiel Schwankungen oder Sprünge von Druck und Flussrate. Dies kann das chromatographische Trennergebnis unerwünscht beeinflussen. Aus der US 2004/0251203 A1 ist ein Flüssigkeitschromatograf bekannt, bei dem dem Lösungsmittel keine Pufferlösung beigefügt ist. Diese Pufferlösung wird vielmehr der mobilen Phase im Betrieb beigefügt, bevor sie dann einem Injektor zugeführt wird.

### OFFENBARUNG

Es ist eine Aufgabe der Erfindung, einen Injektor für ein Probentrenngerät bereitzustellen, der ein Probentrennen im Wesentlichen frei von durch eine Probeninjektion verursachten Druck- und/oder Flussschwankungen ermöglicht. Die Aufgabe wird mittels der unabhängigen Ansprüche gelöst. Weitere Ausführungsbeispiele sind in den abhängigen Ansprüchen gezeigt.

Gemäß der vorliegenden Erfindung ist ein Injektor (der auch als Probenaufgabeeinrichtung bezeichnet werden kann) zum Injizieren einer fluidischen Probe in eine mobile Phase in einem Probentrenngerät (zum Beispiel einem chromatographischen Probentrenngerät) geschaffen, wobei der Injektor einen Haupt-Flusspfad zwischen einem Fluidantrieb (zum Beispiel einer Hochdruckpumpe) und einer Probentrenneinrichtung (zum Beispiel einer chromatographischen Trenneinrichtung), wobei der Fluidantrieb zum Antreiben der mobilen Phase und die Probentrenneinrichtung zum Trennen der in die mobile Phase injizierten fluidischen Probe ausgebildet ist, eine (insbesondere zusätzlich zu und/oder separat von dem Haupt-Flusspfad ausgebildete) Abführeinrichtung zum Abführen einer (insbesondere vorbestimmten) Menge der mobilen Phase aus dem Haupt-Flusspfad (und insbesondere in einen Abführ-Flusspfad, der allgemein auch als Abführpfad bezeichnet werden kann), und eine (insbesondere zusätzlich zu und/oder separat von dem Haupt-Flusspfad ausgebildete) Zuführeinrichtung zum Zuführen einer (insbesondere vorbestimmten) Menge der fluidischen Probe und/oder eines Lösungsmittels (insbesondere aus einem Zuführ-Flusspfad, der allgemein auch als Zuführpfad bezeichnet werden kann) in den Haupt-Flusspfad aufweist, wobei die abgeführte Menge und die zugeführte Menge (bevorzugt im Wesentlichen zeitgleich zu- bzw. abgeführt werden und) einander zumindest teilweise kompensieren.

Die Abführeinrichtung kann sich zumindest teilweise in einem Abführ-Flusspfad befinden, der fluidisch mit dem Haupt-Flusspfad über zumindest einen Abführ-Ankoppelpunkt (oder auch Verzweigungsstelle genannt) gekoppelt sein kann, aber ansonsten extern zu dem Haupt-Flusspfad verlaufen kann. Entsprechend kann sich auch die Zuführeinrichtung zumindest teilweise in einem Zuführ-Flusspfad befinden, der fluidisch mit dem Haupt-Flusspfad über zumindest einen Zuführ-Ankoppelpunkt (oder auch Vereinigungsstelle genannt) gekoppelt sein kann, aber ansonsten extern zu dem Haupt-Flusspfad verlaufen kann. Bevorzugt kann sich - innerhalb des Haupt-Flusspfades - der zumindest eine Abführ-Ankoppelpunkt flussaufwärts zu dem zumindest einen Zuführ-Ankoppelpunkt befinden. Der Abführ-Flusspfad und der Zuführ-Flusspfad können optional fluidisch miteinander gekoppelt sein, bevorzugt an zu dem Abführ-Ankoppelpunkt bzw. dem Zuführ-Ankoppelpunkt entgegengesetzten Enden. Der Abführ-Flusspfad und der Zuführ-Flusspfad können miteinander wirk-gekoppelt sein, insbesondere derart, dass die Fluid-Flüsse in dem Abführ-Flusspfad und dem Zuführ-Flusspfad einander entsprechen, vorzugsweise zeitlich und/oder der Größe nach, also z.B., dass eine Flussrate in dem Abführ-Flusspfad einer Flussrate in dem Zuführ-Flusspfad zeitlich und/oder der Größe bzw. des Betrages nach entspricht und vorzugsweise diese gleich sind. Vorzugsweise kann die Kopplung zwischen dem Abführ-Flusspfad und dem Zuführ-Flusspfad so ausgeführt sein, dass kein (fluidischer) Durchfluss zwischen dem Abführ-Flusspfad und dem Zuführ-Flusspfad besteht, d.h. dass kein Fluid aus dem Abführ-Flusspfad in den Zuführ-Flusspfad überführt wird.

Gemäß einem Ausführungsbeispiel ist ein Probentrenngerät zum Trennen einer fluidischen Probe bereitgestellt, wobei das Probentrenngerät einen Fluidantrieb zum Antreiben einer mobilen Phase, eine Probentrenneinrichtung zum Trennen der fluidischen Probe in der mobilen Phase, und einen Injektor mit den oben beschriebenen Merkmalen zum Injizieren der fluidischen Probe in die mobile Phase aufweist.

Es ist auch ein Verfahren bereitgestellt, wobei bei dem Verfahren eine mobile Phase in einem Haupt-Flusspfad eines Probentrenngeräts zwischen einem Fluidantrieb und einer Probentrenneinrichtung angetrieben wird, eine (insbesondere vorbestimmte) Menge der mobilen Phase (insbesondere an einem an einer fluidischen Verzweigungsstelle von dem Haupt-Flusspfad abzweigenden und von dem Haupt-Flusspfad separat ausgebildeten Abführ-Flusspfad) aus dem Haupt-Flusspfad abgeführt wird, und eine (insbesondere vorbestimmte) Menge einer fluidischen Probe und/oder eines Lösungsmittels (insbesondere an einem an einer fluidischen Vereinigungsstelle in den Haupt-Flusspfad einmündenden und von dem Haupt-Flusspfad separat ausgebildeten Zuführ-Flusspfad) in den Haupt-Flusspfad zugeführt wird, wobei die abgeführte Menge und die zugeführte Menge derart bemessen werden, dass sie einander zumindest teilweise kompensieren.

Im Rahmen der vorliegenden Anmeldung wird unter dem Begriff "fluidische Probe" insbesondere ein Medium verstanden, das Gas und/oder eine Flüssigkeit sowie die eigentlich zur analysierende Materie enthält (zum Beispiel eine biologische Probe wie zum Beispiel eine Proteinlösung, eine pharmazeutische Probe, etc.).

Im Rahmen der vorliegenden Anmeldungen wird unter dem Begriff "mobile Phase" insbesondere ein Fluid (insbesondere ein Gas und/oder eine Flüssigkeit) verstanden, das als Trägermedium zum Transportieren der fluidischen Probe von dem Fluidantrieb zu der Probentrenneinrichtung dient. Zum Beispiel kann die mobile Phase ein (zum Beispiel organisches und/oder anorganisches) Lösungsmittel oder eine Lösungsmittelzusammensetzung sein (zum Beispiel Wasser und Ethanol).

Im Rahmen der vorliegenden Anmeldungen wird unter dem Begriff "Lösungsmittel" insbesondere ein (zum Beispiel organisches und/oder anorganisches) Fluid (weiter insbesondere ein Gas und/oder eine Flüssigkeit) verstanden, das im Rahmen der Trennanalyse verwendet wird. Zum Beispiel kann das Lösungsmittel ein Verdünnungsmittel für die fluidische Probe oder eine Spüllösung sein. Das Lösungsmittel kann auch als Lösungsmittelzusammensetzung ausgebildet sein (zum Beispiel Wasser und Ethanol).

Im Rahmen der vorliegenden Anmeldung kann unter dem Begriff "Haupt-Flusspfad" (der auch ganz allgemein als Flusspfad bezeichnet werden kann) insbesondere ein fluidischer Pfad zum Transportieren eines Fluids von dem Fluidantrieb (insbesondere einer Hochdruckpumpe) zu der Probentrenneinrichtung (insbesondere eine Chromatografie-Trennsäule) verstanden werden. Bevorzugt gehören andere fluidische Pfade des Injektors oder des Probentrenngeräts nicht zum Haupt-Flusspfad. Insbesondere können solche fluidischen Pfade des Injektors oder des Probentrenngeräts nicht zum Haupt-Flusspfad gehören, die vom Haupt-Flusspfad abzweigen und/oder in den Haupt-Flusspfad einmünden. Insbesondere kann ein vom Haupt-Flusspfad abzweigender Abführ-Flusspfad, in dem zumindest ein Teil einer vom Haupt-Flusspfad separaten Abführeinrichtung implementiert sein kann, als ein vom Haupt-Flusspfad separater und vom Haupt-Flusspfad unterschiedlicher fluidischer Pfad ausgebildet sein. Alternativ oder ergänzend kann ein in den Haupt-Flusspfad mündender Zuführ-Flusspfad, in dem zumindest ein Teil einer vom Haupt-Flusspfad separaten Zuführeinrichtung implementiert sein kann, als ein vom Haupt-Flusspfad separater und vom Haupt-Flusspfad unterschiedlicher fluidischer Pfad ausgebildet sein.

Im Rahmen der vorliegenden Anmeldungen wird unter dem Begriff "zumindest teilweise kompensieren" insbesondere verstanden, dass die abgeführte Menge die zugeführte Menge bzw. die Gesamtmenge oder Füllmenge ganz oder teilweise mindert, sodass im Endeffekt gar keine zusätzliche Fluidmenge (im Sinne einer vollständigen Kompensation) oder eine gegenüber der zugeführten Menge verringerte zusätzliche Fluidmenge in Richtung der Probentrenneinrichtung fließt. Die genannte Kompensation kann auch dergestalt erfolgen, dass die abgeführte Menge die zugeführte Menge sogar überschreitet.

Gemäß der Erfindung kann bei der Injektion einer fluidischen Probe in einen Trennpfad zwischen einem Fluidantrieb und einer Probentrenneinrichtung eine zur Trennung bestimmte fluidische Probe (oder ein Lösungsmittel) eingeführt werden und zur Reduzierung von Artefakten infolge des veränderten Flusses im Haupt-Flusspfad mobile Phase aus dem Haupt-Flusspfad abgeführt werden. Eine starke Veränderung der Flussrate oder des Drucks bzw. das Ausbilden anderer Artefakte (wie zum Beispiel fluidische Oszillationen oder Schwankungsphänomene oder Druckstöße), die herkömmlich beim Injizieren einer fluidischen Probe zum Beispiel nach dem Prinzip der "Feed Injection" auftreten können, kann durch das vollständige oder zumindest teilweise Ausgleichen der beim Injizieren in den Haupt-Flusspfad eingekoppelten Fluidmenge durch das Entnehmen mobiler Phase stark unterdrückt oder ganz eliminiert werden. Anschaulich kann bei der Probeninjektion ein Fluss hin zu der Probentrenneinrichtung im Wesentlichen konstant gehalten werden und somit ein Druck (insbesondere an der Probentrenneinrichtung) im Wesentlichen konstant gehalten werden. Beim Probeninjizieren wird dadurch der Fluss allenfalls marginal gestört. Durch das Unterdrücken von Artefakten infolge des Injektionsvorgangs kann ein störungsfreies Probentrennen sichergestellt werden.

Im Weiteren werden weitere Ausführungsbeispiele des Injektors, des Probentrenngeräts und des Verfahrens beschrieben.

Gemäß einem Ausführungsbeispiel kann der Haupt-Flusspfad (insbesondere ein Hochdruckpfad) weder die Abführeinrichtung noch die Zuführeinrichtung enthalten. Insbesondere kann ein fluidischer Abführ-Flusspfad vorgesehen sein, der (zum Beispiel an einer fluidischen Verzweigungsstelle) vom Haupt-Flusspfad wegführt. Alternativ oder ergänzend kann ein fluidischer Zuführ-Flusspfad vorgesehen sein, der (zum Beispiel an einer fluidischen Vereinigungsstelle) in den Haupt-Flusspfad einmünden kann. Letzteres kann insbesondere erfolgen, während der Fluss im Haupt-Flusspfad (insbesondere unter Hochdruck) aufrechterhalten bleibt. Ferner können der Abführ-Flusspfad und der Zuführ-Flusspfad im Verhältnis zum Haupt-Flusspfad mit diesem nicht identisch sein und auch keinen Teil des Haupt-Flusspfads bilden, sondern davon separat oder unabhängig (aber vorzugsweise durchgehend oder zeitweise mit dem Haupt-Flusspfad fluidgekoppelt) sein. Allerdings können der Haupt-Flusspfad, der Zuführ-Flusspfad und der Abführ-Flusspfad gemeinsam gesteuert und miteinander synchronisiert werden.

Gemäß einem Ausführungsbeispiel erfolgt kein Durchfluss von Fluid (insbesondere einer Flüssigkeit) durch den Abführ-Flusspfad und durch den Zuführ-Flusspfad. Stattdessen wird gemäß einem solchen Ausführungsbeispiel von dem Abführ-Flusspfad abgeführtes Fluid nicht in den Zuführ-Flusspfad eingeführt. Die in dem Zuführ-Flusspfad und in dem Abführ-Flusspfad fließenden Fluide können somit voneinander unterschiedlich sein.

Gemäß einem Ausführungsbeispiel kann eine vorbestimmte oder definierte Menge der fluidischen Probe in den Haupt-Flusspfad zugeführt werden. Dadurch ist ein besonders präziser Ausgleich der hinzugefügten Flüssigkeit durch entnommene Flüssigkeit möglich. Es ist zum Beispiel möglich, fluidische Probe kontinuierlich und somit unterbrechungsfrei zuzuführen, bis fluidische Probe in einem entsprechenden Probenreservoir (zum Beispiel ein Probeaufnahmevolumen, zum Beispiel eine sogenannte "Sample Loop") aufgebraucht ist. Es ist aber auch möglich, in einem diskontinuierlichen Prozess ein bestimmtes Probenvolumen mit einer oder mehreren Unterbrechungen in den Haupt-Flusspfad einzuleiten, zum Beispiel definiert durch ein von einem Kolben einer Kolbenpumpe zurückgelegten Weg in einer Kolbenkammer.

Gemäß einem Ausführungsbeispiel kann die jeweilige Menge ein Volumen sein. Anders ausgedrückt kann die zumindest teilweise Kompensation durch einen teilweisen oder vollständigen Ausgleich eines Volumens von zugeführter fluidischer Probe bzw. zugeführten Lösungsmittels durch ein abgeführtes Volumen von Lösungsmittel bzw. von mobiler Phase erfolgen. Alternativ kann auch auf Basis einer zugeführten Masse der Probe bzw. des Lösungsmittels die hinzugefügte Fluidmenge ganz oder teilweise kompensiert werden, indem eine entsprechende Masse der mobilen Phase abgeführt wird.

Gemäß einem Ausführungsbeispiel können die Zuführeinrichtung und die Abführeinrichtung so eingerichtet sein, dass sich die zugeführte Menge (insbesondere ein zugeführtes Fluidvolumen) und die abgeführte Menge (insbesondere ein abgeführtes Fluidvolumen) um weniger als 30 Volumenprozent, insbesondere um weniger als 10 Volumenprozent, voneinander unterscheiden. Entsprechend geringe Diskrepanzen zwischen den Mengen zugeführten und abgeführten Fluids können vom Probentrenngerät ohne eine signifikante Verschlechterung der Störungsfreiheit der Messung bzw. ohne Entstehen ausgeprägter Artefakte aufgefangen werden. Des Weiteren kann eine zulässige Diskrepanz auf den Systemfluss bezogen werden, etwa dergestalt, dass die Diskrepanz geteilt durch die Einspritzdauer (was die Abweichung der Gesamtflussrate ergibt) weniger als 30%, insbesondere weniger als 10%, von der Systemflussrate beträgt.

Gemäß einem Ausführungsbeispiel können die Zuführeinrichtung und die Abführeinrichtung so eingerichtet sein, dass die zugeführte Menge (insbesondere ein zugeführtes Fluidvolumen) und die abgeführte Menge (insbesondere ein abgeführtes Fluidvolumen) im Wesentlichen gleich sind. Somit kann die abgezweigte Menge der zugeführten Menge zumindest im Wesentlichen entsprechen. Bevorzugt ist es, wenn das zugeführte Fluid und das abgeführte Fluid hinsichtlich Menge (und besonders bevorzugt auch hinsichtlich Flussrate, wobei alternativ auch Modifikationen in der Flussratemöglich sind) gänzlich übereinstimmen. Bei einer im Wesentlichen vollständigen oder exakten Kompensation der Mengen von zugeführtem Fluid und abgeführtem Fluid ist ein besonders störungsrobuster Betrieb des Probentrenngeräts ermöglicht.

Gemäß einem Ausführungsbeispiel kann eine Flussrate der abgeführten mobilen Phase einer Flussrate der zugeführten fluidischen Probe und/oder des zugeführten Lösungsmittels entsprechen. Unter einer Flussrate wird in diesem Zusammenhang insbesondere das Volumen eines fließenden Fluids pro Zeiteinheit verstanden. Bevorzugt können die Zuführeinrichtung und die Abführeinrichtung eingerichtet sein, das Zuführen der fluidischen Probe und/oder des Lösungsmittels und das Abführen der mobilen Phase derart durchzuführen, dass die Gesamtflussrate in dem Haupt-Flusspfad außerhalb des Abschnittes zwischen der Zuführeinrichtung und der Abführeinrichtung unverändert oder im Wesentlichen unverändert bleibt. Anders ausgedrückt können die Zuführeinrichtung und die Abführeinrichtung mit Vorteil eingerichtet sein, das Zuführen der fluidischen Probe und/oder des Lösungsmittels und das Abführen der mobilen Phase derart durchzuführen, dass eine Flussrate stromabwärts der Zuführeinrichtung und eine Flussrate stromaufwärts der Abführeinrichtung einander entsprechen, insbesondere im Wesentlichen gleich sind. Bei einer im Wesentlichen vollständigen Flussratenkompensation können die Artefakte besonders gut unterdrückt oder eliminiert werden.

Gemäß einem Ausführungsbeispiel können die Zuführeinrichtung und die Abführeinrichtung eingerichtet sein, das Zuführen der fluidischen Probe und/oder des Lösungsmittels und das Abführen der mobilen Phase synchronisiert, d.h. hinsichtlich des zeitlichen Ablaufs des Zuführens bzw. Abführens aufeinander abgestimmt, durchzuführen. Zum Beispiel kann eine gemeinsame Steuereinrichtung einen wohldefinierten zeitlichen und damit auch funktionellen Bezug zwischen dem Zuführen fluidischer Probe oder eines Lösungsmittels einerseits und dem Abführen einer mobilen Phase andererseits einsteuern. Auf diese Weise kann der zeitliche Bezug zwischen zugeführtem Fluid und abgeführtem Fluid so abgestimmt werden, dass fluidische Artefakte wie zum Beispiel Druckschwankungen oder Druckstöße besonders wirksam unterdrückt werden können. Auch eine mechanische Kopplung von Förder- bzw. Aufnahmeeinrichtungen (respektive Pumpen) zum Zuführen und Abführen des jeweiligen Fluids kann eine solche Synchronisation unterstützen, zum Beispiel durch Beaufschlagen der Kolben mit einer zueinander festen Phasenbeziehung als Ergebnis der mechanischen Kopplung.

Gemäß einem Ausführungsbeispiel können die Zuführeinrichtung und die Abführeinrichtung eingerichtet sein, das Zuführen der fluidischen Probe und/oder des Lösungsmittels und das Abführen der mobilen Phase simultan, d.h. gleichzeitig, durchzuführen. Eine besonders gute Störungsfreiheit, Unterdrückung der Artefakte bzw. Performance kann erhalten werden, wenn ein Zeitintervall des Zuführens der fluidischen Probe und/oder des Lösungsmittels in den Haupt-Flusspfad einerseits und ein Zeitintervall des Abführens der mobilen Phase aus dem Haupt-Flusspfad andererseits identisch sind oder zumindest zeitlich überlappen.

Gemäß einem Ausführungsbeispiel kann der Injektor eine fluidische Vereinigungsstelle in dem Haupt-Flusspfad aufweisen, an der die zugeführte fluidische Probe und/oder das zugeführte Lösungsmittel einerseits und mittels des Fluidantriebs angetriebene (und nicht zuvor abgeführte) mobile Phase andererseits beim Zuführen als fluidische Flüsse vereinigt werden. An einer solchen fluidischen Vereinigungsstelle können sich die Teilflüsse der zwischen dem Fluidantrieb und der Probentrenneinrichtung geförderten mobilen Phase einerseits und der in den Haupt-Flusspfad injizierten fluidischen Probe bzw. des in den Haupt-Flusspfad injizierten Lösungsmittels zu einem gemeinsamen Fluss vereinigen, der von dem Fluidantrieb zur Probentrenneinrichtung gefördert wird. Eine solche fluidische Vereinigungsstelle kann zum Beispiel als fluidisches T-Stück, fluidisches Y-Stück oder fluidisches X-Stück ausgebildet sein.

Gemäß einem Ausführungsbeispiel kann der Injektor eine fluidische Verzweigungsstelle in dem Haupt-Flusspfad aufweisen, an der mittels des Fluidantriebs angetriebene mobile Phase zumindest teilweise aus dem Haupt-Flusspfad abgeführt wird. Insbesondere kann an der Verzweigungsstelle die mobile Phase zum Teil in Richtung der Probentrenneinrichtung geführt und zu einem anderen Teil aus dem Haupt-Flusspfad abgeführt werden. Eine solche fluidische Verzweigungsstelle kann zum Beispiel als fluidisches T-Stück, fluidisches Y-Stück oder fluidisches X-Stück ausgebildet sein. Eine Verzweigungsstelle kann aber auch außerhalb des Injektors angeordnet sein.

Gemäß einem Ausführungsbeispiel kann die fluidische Verzweigungsstelle stromaufwärts der fluidischen Vereinigungsstelle angeordnet sein. Die mittels des Fluidantriebs zur Probentrenneinrichtung geförderte mobile Phase fließt dann zunächst zu der fluidischen Verzweigungsstelle, wo sie sich in zwei Teilflüsse aufspalten kann. Einer der Teilflüsse kann dann weiter zur fluidischen Vereinigungsstelle fließen. Insbesondere können die fluidische Verzweigungsstelle und die fluidische Vereinigungsstelle relativ zueinander derart angeordnet sein, dass Fluid nach Durchlaufen der Vereinigungsstelle nicht an der Verzweigungsstelle vorbeiläuft.

Gemäß einem Ausführungsbeispiel kann der Haupt-Flusspfad derart fluidisch zwischen den Fluidantrieb und die Probentrenneinrichtung einkoppelbar oder eingekoppelt sein, dass ein Fluss zwischen dem Fluidantrieb und der Probentrenneinrichtung im Betrieb des Probentrenngeräts ununterbrochen aufrechterhalten bleibt. Mit Vorteil kann ein Unterbrechen des Flusses beim Injizieren der fluidischen Probe bzw. des Lösungsmittels und/oder beim teilweise Auskoppeln von mobiler Phase aus dem Haupt-Flusspfad bei einem Injektor gemäß dem beschriebenen Ausführungsbeispiel der Erfindung vermieden werden, indem auch beim Injizieren der Fluss mobiler Phase zwischen Fluidantrieb und Probentrenneinrichtung weiterläuft. Diese Maßnahme reduziert weiter die Ursachen, die herkömmlich zum Ausbilden fluidischer Artefakte beim Betrieb des Probentrenngeräts führen können.

Gemäß einem Ausführungsbeispiel kann die Abführeinrichtung rein passiv mit einem insbesondere zuschaltbaren Restriktor (d.h. einem fluidischen Widerstand) ausgebildet sein. Dieser kann mit Vorteil so konfiguriert werden, dass ein zugeführter Fluss einem passiv abgeführten Fluss im Wesentlichen gleich ist. Bei einer solchen Ausgestaltung wird die Abführeinrichtung nicht aktiv durch eine Pumpe oder dergleichen gesteuert, sondern kann allein dadurch aktiviert werden, dass ein fluidischer Restriktor an den Haupt-Flusspfad angekoppelt wird. Die Größe des fluidischen Widerstandswerts des Restriktors bestimmt dann, welche Teilmenge der mobilen Phase aus dem Haupt-Flusspfad abgeführt wird.

Gemäß einem Ausführungsbeispiel kann der Injektor mindestens eine Pumpe aufweisen, insbesondere eine Kolbenpumpe aufweisen, deren Kolben zum Zuführen der fluidischen Probe und/oder des Lösungsmittels und/oder zum Abführen der mobilen Phase bewegbar ist oder sind. Unter einer "Kolbenpumpe" wird im Rahmen der vorliegenden Anmeldung insbesondere ein Fluidantrieb verstanden, der mindestens einen in mindestens einer zugehörigen Kolbenkammer reziprozierenden Kolben aufweist, der beim Reziprozieren Fluid fördert. Mit einer oder mehreren Kolbenpumpen können mit geringem Aufwand und gleichzeitig hochpräzise die zugeführte Fluidmenge und die abgeführte Fluidmenge aufeinander abgestimmt werden.

Allerdings ist es alternativ zum Implementieren mindestens einer Kolbenpumpe möglich, eine oder vorzugsweise mindestens zwei Pumpeinrichtungen (zum Beispiel peristaltische Pumpen) bereitzustellen, die nicht als Kolbenpumpe ausgebildet ist oder sind. Zum Beispiel können solche Pumpeinrichtungen auch elektrisch synchronisiert werden und dadurch das beschriebene Zuführen bzw. Abführen bewerkstelligen. Es sind also auch andere Pumpen als Kolbenpumpen zum Antrieb der Fluide möglich (zum Beispiel peristaltische Pumpen). Im Weiteren (siehe insbesondere die folgenden vier Absätze) werden zusätzliche Ausgestaltungen anhand des Beispiels von Kolbenpumpen beschrieben, wobei ein Fachmann verstehen wird, dass für all die folgenden Ausführungsbeispiele anstatt einer, zwei oder mehr Kolbenpumpen auch eine, zwei oder mehr Pumpen anderer Art eingesetzt werden können.

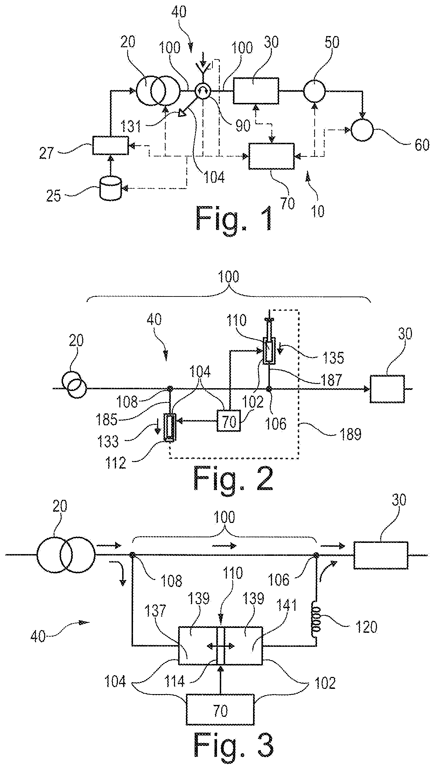

Gemäß einem Ausführungsbeispiel kann zum Zuführen der fluidischen Probe und/oder des Lösungsmittels und zum Abführen der mobilen Phase eine gemeinsame Kolbenpumpe vorgesehen und derart eingerichtet sein, in einem Push-Pull-Betrieb simultan das Zuführen der fluidischen Probe und/oder des Lösungsmittels und das Abführen der mobilen Phase zu bewerkstelligen. Ein solches Ausführungsbeispiel ist in Figur 3 dargestellt. Zum Beispiel kann dann eine Kolbenpumpe mit zwei variablen Fluidaufnahmevolumina derart betrieben werden, dass eine Kolbenverschiebung die zwei variablen Fluidaufnahmevolumina abhängig von einer aktuellen Kolbenposition verändert. In einem Fluidaufnahmevolumen kann dann die fluidische Probe bzw. das Lösungsmittel untergebracht sein, wohingegen in dem anderen Fluidaufnahmevolumen die mobile Phase untergebracht werden kann. Jede Kolbenverschiebung erhöht dann das eine Fluidaufnahmevolumen auf Kosten des jeweils anderen, und umgekehrt. Auf diese Weise kann ein besonders kompakter und einfacher Injektor geschaffen werden.

Gemäß einem anderen Ausführungsbeispiel kann der Injektor eine erste Kolbenpumpe zum Zuführen der fluidischen Probe und/oder des Lösungsmittels und eine zweite Kolbenpumpe zum Abführen der mobilen Phase aufweisen. Besonders präzise und variabel betreibbar ist ein Injektor, bei dem zwei synchronisierte Kolbenpumpen vorgesehen werden, von denen eine das Abführen der mobilen Phase und die andere das Zuführen der fluidischen Probe bzw. des Lösungsmittels bewerkstelligt. Mit einer solchen Ausgestaltung ist eine besonders starke Erhöhung der Störungsfreiheit von Trennergebnissen möglich.

Gemäß einem Ausführungsbeispiel können die erste Kolbenpumpe und die zweite Kolbenpumpe miteinander wirkgekoppelt sein, insbesondere miteinander synchronisiert sein. Zum Beispiel kann dies mittels einer Exzenterscheibe erreicht werden, die antriebsseitig mit den reziprozierfähigen Kolben der beiden Kolbenpumpen so gekoppelt sein kann, dass die zum Beispiel zyklischen Kolbenhübe der beiden Kolbenpumpen präzise korreliert werden können. Anders ausgedrückt können die beiden Kolbenpumpen dann mit einer fest definierten Phasenbeziehung betrieben werden.

Gemäß einem Ausführungsbeispiel kann die mindestens eine Kolbenpumpe ausgebildet sein, unterbrechungsfrei über eine beliebige Anzahl von Kolbenzyklen hinweg betreibbar zu sein. Auf diese Weise ist ein kontinuierlicher Betrieb des Injektors möglich, wodurch inaktive Zeiträume das Injektors vermieden werden können. Anders ausgedrückt kann eine kontinuierlich laufende Pumpe im Umlaufpfad bereitgestellt werden. Ein zugehöriges Probentrenngerät kann daher besonders effektiv betrieben werden.

Gemäß einem Ausführungsbeispiel kann die Zuführeinrichtung ein Fluidventil aufweisen, das zum Zuführen der fluidischen Probe von einer Probenquelle und/oder zum Zuführen des Lösungsmittels in den Haupt-Flusspfad schaltbar ist. Zum Beispiel kann ein solches Fluidventil eine Rotorkomponente und eine Statorkomponente aufweisen, die relativ zueinander rotierbar sein können und korrespondierende fluidische Strukturen aufweisen können. Zum Beispiel können in der Rotorkomponente fluidische Kanäle (zum Beispiel in Form von Nuten) gebildet sein, die mit fluidischen Anschlüssen (zum Beispiel als Ports bezeichnet) der Statorkomponente fluidisch gekoppelt oder diesbezüglich fluidisch entkoppelt werden können, um verschiedene fluidische Kopplungszustände entsprechend verschiedenen Ventilzuständen einzustellen.

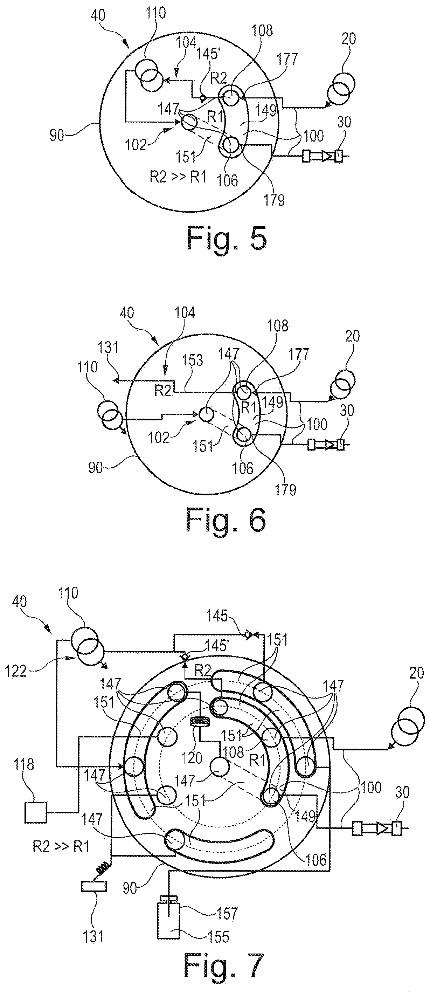

Gemäß einem Ausführungsbeispiel kann der Injektor nur ein einziges Fluidventil aufweisen (siehe zum Beispiel Figur 7). Mit anderen Worten kann der Injektor mit einem einzigen Fluidventil ausgestattet sein. Auf diese Weise können der Injektor und das zugehörige Probentrenngerät besonders kompakt ausgebildet werden.

Gemäß einem Ausführungsbeispiel kann der Injektor ein mit dem Fluidventil fluidisch gekoppeltes Probenaufnahmevolumen (das auch als "Sample Loop" bezeichnet werden kann) aufweisen, wobei das Fluidventil derart schaltbar ist, dass nach Aufnehmen der fluidischen Probe von der Probenquelle in das Probenaufnahmevolumen mittels Schaltens des Fluidventils die in dem Probenaufnahmevolumen aufgenommene fluidische Probe dem Haupt-Flusspfad zuführbar ist. Auf diese Weise kann die Menge zuzuführender fluidischer Probe sehr präzise eingestellt werden (zum Beispiel korrespondierend zu der Größe des Probenaufnahmevolumens).

Gemäß einem Ausführungsbeispiel kann der Injektor eine Vorkomprimiereinrichtung aufweisen, die eingerichtet ist, die fluidische Probe und/oder das Lösungsmittel vor dem Zuführen in den Haupt-Flusspfad vorzukomprimieren. Unerwünschte Druckstöße beim Schalten eines Fluidventils können dadurch mit Vorteil vermieden oder zumindest stark unterdrückt werden. Wenn vor dem Zuführen der fluidischen Probe in den Haupt-Flusspfad der Druck der fluidischen Probe dem Druck in dem Haupt-Flusspfad angenähert oder sogar genau auf diesen Druck gebracht wird, können unerwünschte und die Störungsfreiheit beeinträchtigende Druckstöße beim Zuführen der fluidischen Probe oder des Lösungsmittels in den Haupt-Flusspfad abgemildert oder ganz vermieden werden.

Gemäß einem Ausführungsbeispiel kann die Vorkomprimiereinrichtung eingerichtet sein, das genannte Probenaufnahmevolumen vor Schalten in den Haupt-Flusspfad vorzukomprimieren. Dann kann die fluidische Probe oder das Lösungsmittel zunächst auf das Probenaufnahmevolumen bzw. die Sample Loop aufgebracht werden, nachfolgend der Druck des Probenaufnahmevolumens erhöht und so in den Bereich des Drucks in dem Haupt-Flusspfad gebracht werden, und schließlich die fluidische Probe oder das Lösungsmittel in vorkomprimiertem Zustand und somit ohne ausgeprägten Druckstoß in den Haupt-Flusspfad eingeführt werden. Außerdem kann dann die Lebensdauer des Probentrenngeräts bzw. weiterer Systemelemente erhöht werden, da schädigende Druckstöße reduziert oder ganz vermieden werden.

Gemäß einem Ausführungsbeispiel kann die Vorkomprimiereinrichtung eine Kolbenpumpe aufweisen, die zum Vorkomprimieren und zum Zuführen der fluidischen Probe und/oder des Lösungsmittels in den Haupt-Flusspfad betreibbar ist. Anschaulich kann mit einem Verschieben des Kolbens der Kolbenpumpe der Druck der fluidischen Probe bzw. des Lösungsmittels so erhöht werden, dass dadurch die Druckdifferenz zwischen dem ursprünglichen Druck von fluidischer Probe bzw. Lösungsmittel einerseits und dem Haupt-Flusspfad andererseits mit Vorteil verringert wird. In einem anderen Betriebszustand des Injektors kann dieselbe Kolbenpumpe zum Fördern der fluidischen Probe und/oder des Lösungsmittels eingesetzt werden.

Gemäß einem Ausführungsbeispiel kann das Fluidventil ausgebildet sein, in seinem Inneren zumindest einen Teil des Haupt-Flusspfads, der Zuführeinrichtung und/oder der Abführeinrichtung zu bilden oder zu integrieren. Die Integration von einer oder mehrerer dieser Komponenten in das Fluidventil des Injektors ermöglicht eine besonders kompakte Konfiguration sowie kurze fluidische Wege und daher geringe Totvolumina und eine Verringerung oder eine vollständige Eliminierung der nicht gespülten Haupt-Flusspfadabschnitte.

Gemäß einem Ausführungsbeispiel kann als von der Zuführeinrichtung zugeführtes Lösungsmittel zumindest teilweise die von der Abführeinrichtung abgeführte (insbesondere eine bei einem der früheren Injektionsvorgänge oder bei dem aktuellen Injektionsvorgang anfallende) mobile Phase verwendet werden. Die zum Betrieb des Injektors bzw. des Probentrenngeräts benötigte Menge von Betriebsfluiden sowie die Menge von flüssigem Abfall kann auf diese Weise verringert werden.

Gemäß einem Ausführungsbeispiel kann die Abführeinrichtung stromabwärts von der Zuführeinrichtung eingekoppelt sein, insbesondere so, dass eine vollständige Durchmischung des Flusses der mobilen Phase mit dem zugeführten Fluss des Lösungsmittels und/oder der fluidischen Probe erfolgen kann, bevor ein Mischfluss eine Verzweigungsstelle erreicht. Dies kann insbesondere in Kombination mit einer mindestens teilweisen Wiederverwendung der abgeführten mobilen Phase (bzw. Flüssigkeit) für eine kontrollierte Verdünnung der Probe verwendet werden. Des Weiteren kann diese Ausführung in einer Prozessanalyse oder in einer zweidimensionalen Flüssigchromatografieapparatur (2D-LC), insbesondere in einer Tandem-LC-Apparatur, beschrieben in der Anmeldung WO 2012/175111 A1 derselben Anmelderin, vorteilhaft sein. Hierdurch kann zum Beispiel eine Probe repräsentativ auf die Trenneinrichtung geleitet werden, ohne dass die Trenneinrichtung überladen wird oder in Kontakt mit einer nicht oder nicht ausreichend verdünnten Probenmatrix kommt. Dass ein proportionaler Teil der Probe bei der Injektion verworfen wird, ist in Anwendungen dieser Art meistens hinnehmbar oder sogar vorteilhaft.

Gemäß einem Ausführungsbeispiel kann das Probentrenngerät ein präparatives Probentrenngerät sein. Bei einem präparativen Probentrenngerät (zum Beispiel eine präparative HPLC) werden große Fluidvolumina bewegt (bei einer Probenanalyse zum Beispiel bis zu 500 ml), und die Flussrate kann zum Beispiel bis zu 20 ml/min und mehr betragen. Auch die Probenvolumina können mehrere Milliliter bis mehrere hundert Milliliter und darüber hinaus betragen. Alternativ kann ein Probentrenngerät gemäß einem exemplarischen Ausführungsbeispiel aber auch als analytisches Probentrenngerät ausgebildet sein, das mit wesentlich geringeren Fluidvolumina und Flussraten betrieben wird.

Das Probentrenngerät kann ein mikrofluidisches Messgerät, ein Life Science-Gerät, ein Flüssigchromatographiegerät, eine HPLC (High Performance Liquid Chromatography), eine UHPLC-Anlage, ein SFC- (superkritische Flüssigchromatographie) Gerät, ein Gaschromatographiegerät, ein Elektrochromatographiegerät und/oder ein Gelelektrophoresegerät sein. Allerdings sind viele andere Anwendungen möglich.

Der Fluidantrieb bzw. die Fluidpumpe kann zum Beispiel dazu eingerichtet sein, die mobile Phase mit einem hohen Druck, zum Beispiel einige 100 bar bis hin zu 1000 bar und mehr, durch das System hindurch zu befördern.

Das Probentrenngerät kann einen Probeninjektor bzw. eine Probenaufgabeeinheit zum Einbringen der Probe in den fluidischen Trennpfad aufweisen. Ein solcher Probeninjektor kann eine mit einem Sitz koppelbare Injektionsnadel in einem entsprechenden Flüssigkeitspfad aufweisen, wobei die Nadel aus diesem Sitz herausgefahren werden kann, um Probe aufzunehmen. Nach dem Wiedereinführen der Nadel in den Sitz kann die Probe weiterverarbeitet werden.

Das Probentrenngerät kann einen Fraktionssammler zum Sammeln der getrennten Komponenten aufweisen. Ein solcher Fraktionssammler kann die verschiedenen Komponenten zum Beispiel in verschiedene Flüssigkeitsbehälter führen. Die analysierte Probe kann aber auch einem Abflussbehälter zugeführt werden.

Vorzugsweise kann das Probentrenngerät einen Detektor zur Detektion der getrennten Komponenten aufweisen. Ein solcher Detektor kann ein Signal erzeugen, welches beobachtet und/oder aufgezeichnet werden kann, und welches für die Anwesenheit und Menge der Probenkomponenten in dem durch das System fließenden Fluid indikativ ist.

### KURZE BESCHREIBUNG DER FIGUREN

Andere Ziele und viele der begleitenden Vorteile von Ausführungsbeispielen der vorliegenden Erfindung werden leicht wahrnehmbar werden und besser verständlich werden unter Bezugnahme auf die folgende detailliertere Beschreibung von Ausführungsbeispielen in Zusammenhang mit den beigefügten Zeichnungen. Merkmale, die im Wesentlichen oder funktionell gleich oder ähnlich sind, werden mit denselben Bezugszeichen versehen.
Figur 1 zeigt ein als HPLC-Messgerät ausgebildetes Probentrenngerät gemäß einem exemplarischen Ausführungsbeispiel der Erfindung.
Figur 2 zeigt einen Injektor für ein Probentrenngerät gemäß einem exemplarischen Ausführungsbeispiel der Erfindung.
Figur 3 zeigt einen Injektor für ein Probentrenngerät gemäß einem anderen exemplarischen Ausführungsbeispiel der Erfindung.
Figur 4A und Figur 4B zeigen einen Injektor für ein Probentrenngerät gemäß noch einem anderen exemplarischen Ausführungsbeispiel der Erfindung, wobei Figur 4A einem Zuführen einer fluidischen Probe von einem Probenaufnahmevolumen und Figur 4B einem Ziehen von fluidischer Probe in ein Probenaufnahmevolumen entspricht.
Figur 5 zeigt einen Injektor für ein Probentrenngerät gemäß einem exemplarischen Ausführungsbeispiel der Erfindung.
Figur 6 zeigt einen Injektor für ein Probentrenngerät gemäß einem anderen exemplarischen Ausführungsbeispiel der Erfindung.
Figur 7 zeigt einen Injektor für ein Probentrenngerät gemäß einem exemplarischen Ausführungsbeispiel der Erfindung.
Figur 8 zeigt einen Injektor für ein Probentrenngerät gemäß noch einem anderen exemplarischen Ausführungsbeispiel der Erfindung.
Figur 9 zeigt einen Injektor für ein Probentrenngerät gemäß einem exemplarischen Ausführungsbeispiel der Erfindung.
Figur 10 zeigt einen Injektor für ein Probentrenngerät gemäß einem exemplarischen Ausführungsbeispiel der Erfindung.
Figur 11 zeigt den Injektor gemäß Figur 10 in einem anderen Schaltzustand des dargestellten Fluidventils.
Figur 12 zeigt den Injektor gemäß Figur 10 in noch einem anderen Schaltzustand des dargestellten Fluidventils.
Figur 13 zeigt einen Injektor für ein Probentrenngerät gemäß einem weiteren exemplarischen Ausführungsbeispiel der Erfindung.
Figur 14 zeigt einen Injektor für ein Probentrenngerät gemäß noch einem anderen exemplarischen Ausführungsbeispiel der Erfindung.
Figur 15 zeigt einen Injektor für ein Probentrenngerät gemäß einem anderen exemplarischen Ausführungsbeispiel der Erfindung.

Die Darstellung in der Zeichnung ist schematisch.

Bevor unter Bezugnahme auf die Figuren exemplarische Ausführungsbeispiele der Erfindung näher beschrieben werden, sollen noch allgemein einige grundlegende Überlegungen der vorliegenden Erfindung beschrieben werden, auf deren Basis exemplarische Ausführungsbeispiele der Erfindung entwickelt worden sind.

Gemäß der vorliegenden Erfindung ist ein Injektor für ein Probentrenngerät geschaffen, das (vorzugsweise, aber nicht notwendigerweise gemäß dem "Feed Injection"-Prinzip) betrieben werden kann, um beim Einleiten einer fluidischen Probe bzw. eines Lösungsmittels in einen Haupt-Flusspfad zum Erhöhen der Störungsfreiheit eines Trennergebnisses mobile Phase aus dem System abzuführen. Dadurch kann einer übermäßigen Erhöhung des Flusses beim Zuführen fluidischer Probe bzw. eines Lösungsmittels entgegengewirkt werden. Auf diese Weise ist es insbesondere möglich, eine fluidische Probe in einen Haupt-Flusspfad einzuleiten, ohne den fluidischen Fluss in dem Haupt-Flusspfad außerhalb des Injektors (wobei der Injektor die Einleitungs- und Abzweigstelle beinhalten kann) maßgeblich zu stören. Dies unterdrückt vorteilhaft unerwünschte Fluss- bzw. Druckschwankungen und Druckstöße.

Es ist möglich, fluidische Probe in den Trennpfad zu injizieren, ohne eine von einem Fluidantrieb zum Antreiben mobiler Phase bereitgestellte Flussrate zu reduzieren, abzustellen, ihr einen anderen Wert zuzuweisen oder sie in anderer Weise zu manipulieren. Insbesondere ist es dadurch möglich, den fortlaufenden Betrieb des Fluidantriebs nicht zu stören, eine programmierte Gradientenform nicht zu beeinflussen, auf eine Steuerungsverkoppelung mit dem Fluidantrieb verzichten zu können und/oder andere Vorteile zu erlangen. Um dies zu erreichen, kann zum Beispiel gleichzeitig oder synchron mit dem Injizieren der fluidischen Probe bzw. eines Lösungsmittels in den Haupt-Flusspfad ein entsprechender Teil der mobilen Phase aus dem Haupt-Flusspfad abgeführt werden. Dabei kann die abgeführte Fluidmenge (insbesondere das abgeführte Fluidvolumen) im Wesentlichen gleich zu der Menge eingeleiteter fluidischer Probe gewählt werden, wodurch Störungen und/oder Übergangsphänomene des Gesamtflusses oder Drucks eliminiert werden können. Zum Beispiel kann die Abführflussrate im Wesentlichen gleich zu der Injektionsflussrate eingestellt werden. Dabei kann die Abführflussrate bzw. das Abführvolumen dem Volumen des abgeführten komprimierten Fluids (insbesondere eine Flüssigkeit) entsprechen.

Gemäß einem Ausführungsbeispiel kann die entfernte mobile Phase zu einem anderen Zeitpunkt und/oder an einer anderen Position wieder in den Haupt-Flusspfad eingeleitet werden, wobei dann die Flussrate des Fluidantriebs wieder neu angepasst werden kann. Es ist auch möglich, die entfernte mobile Phase in einen Mobilphasenquellbehälter zurückzuführen oder einem Wastepfad zuzuführen. Auch ist es möglich, die Energie des Abführflusses zumindest teilweise wiederzugewinnen, um den Injektionsfluss anzutreiben.

Die Abführposition zum Abführen der mobilen Phase (insbesondere eines Lösungsmittels oder einer Lösungsmittelzusammensetzung) kann bezüglich der Zuführposition zum Zuführen der fluidischen Probe bzw. des Lösungsmittels stromaufwärts oder stromabwärts angeordnet sein. Die Abführposition kann auch im Bereich der Zuführposition angeordnet sein, allerdings bevorzugt in einem ausreichenden Abstand hierzu, um den Prozess des Zuführens und Abführens nicht durch fluidische Wechselwirkungsphänomene zu stören. Es ist auch möglich, die Abführposition gegenüber der Zuführposition in einem fluidischen Seitenpfad oder in einem fluidischen Parallelpfad vorzusehen. Zum Beispiel kann die Abführposition an einer beliebigen gewünschten Position zwischen einem Hochdruckausgang von einem von mehreren Kanälen des Fluidantriebs und einem Eingang der Probentrenneinrichtung (insbesondere eine chromatographische Trennsäule) angeordnet sein. Insbesondere ist es möglich, die mobile Phase in den entsprechenden Mobilphasenquellbehälter zurückzuführen, wenn sie aus einem der Kanäle einer Mehrkanalpumpe, zum Beispiel einer hochdruckmischenden Binärpumpe (d.h. noch vor dem Mischpunkt), abgeführt worden war.

Es ist (zum Beispiel bei einem Fluidantrieb, der als Mehrkanal-Gradientenpumpe mit Hochdruckfähigkeit und Mischfunktionalität ausgebildet ist) auch möglich, die Abführposition in einem Bereich der fließenden mobilen Phase anzuordnen, in dem diese ein starkes Lösungsmittel ist, oder in einem Bereich der fließenden mobilen Phase anzuordnen, in dem diese ein schwaches Lösungsmittel ist. Dadurch kann die Zusammensetzung der mobilen Phase in einem mit dem zugeführten Probe- bzw. Lösungsmittelvolumen zusammenhängenden Abschnitt zusätzlich angepasst oder moduliert werden.

Der abgeführte Fluss kann zum Beispiel unter Verwendung einer zugehörigen Pumpe aktiv abgeführt werden. Alternativ ist es auch möglich, den abgeführten Fluss passiv (zum Beispiel durch passives Verzweigen eines Flusses, wobei die Abführflussrate durch die fluidische Restriktion des Abführ-Flusspfades bestimmt wird) zu generieren.

Mit Vorteil ist es möglich, einen Probenzuführ-Flusspfad vorzusehen, der eine Dosierpumpe (zum Beispiel ausgebildet als Kolbenpumpe), ein Probenaufnahmevolumen, eine verfahrbare Nadel und einen Sitz zum fluiddichten Aufnehmen der Nadel aufweist. Bevorzugt kann ein solcher Probenzuführ-Flusspfad separat spülbar sein. Die Verwendung eines entsprechenden Ausführungsbeispiels stellt eine hydraulische Injektionsfunktion mit der Möglichkeit bereit, Probenaufnahmevolumen, Nadel und Sitz sowie Dosierpumpe vor oder nach dem Verbinden mit dem Haupt-Flusspfad zu komprimieren bzw. zu dekomprimieren. Auch kann in einem Ausführungsbeispiel die Dosierpumpe mit frischem Lösungsmittel gespült werden, um Verschleppung zu vermeiden.

Beide fluidische Pfade (zum Beispiel Nadel, Probenaufnahmevolumen, Sitz, Dosierpumpe einerseits, analytische Pumpe als Fluidantrieb und chromatographische Trennsäule als Probentrenneinrichtung andererseits) können unabhängig voneinander betrieben werden, außer während der Injektion der fluidischen Probe bzw. des Lösungsmittels. Daher ist es mit Vorteil auch möglich, die Lösungsmittel in beiden fluidischen Pfaden bedarfsweise unterschiedlich zu wählen. Das vorzugsweise beim Zuführen der fluidischen Probe oder des Lösungsmittels durchgeführte Abführen der mobilen Phase erlaubt es, während des Einleitens der Probe bzw. des Lösungsmittels die Störungen des fluidischen Systems annähernd auf Null zu reduzieren.

Gemäß einer Ausgestaltung kann ein Einleiten einer fluidischen Probe gemäß dem "Feed Injection"-Prinzip sofort bzw. instantan (insbesondere ohne Druckerhöhung) durchgeführt werden. Es ist auch ein kontinuierliches Einleiten der fluidischen Probe möglich, indem die Probe zum Reduzieren der Lösungsmittelstärke der Probe in den Haupt-Flusspfad fließt und an der Probentrenneinrichtung (insbesondere einer Säule) fokussiert wird. Es ist eine Reduktion der Konzentration möglich, was aber mit Vorteil nicht auf Kosten der Probenmenge erfolgen kann. Ein Mischen mit der mobilen Phase kann erfolgen, um die Einflüsse auf die Trennung zu reduzieren. Es ist auch ein Einleiten größerer Mengen der fluidischen Probe bzw. ein Einleiten der fluidischen Probe über ein langes Zeitintervall möglich, wobei die Probe zum Reduzieren der Lösungsmittelstärke der Probe in den Haupt-Flusspfad fließt und gemäß dem Ausführungsbeispiel mit der mobilen Phase verdünnt und an der Probentrenneinrichtung (insbesondere einer Säule) fokussiert wird.

Gemäß einem Ausführungsbeispiel kann die Geschwindigkeit der "Feed Injection" abhängig von den Erfordernissen einer (insbesondere chromatographischen) Trennmethode eingestellt werden.

Auch ist es gemäß einem Ausführungsbeispiel mit Vorteil möglich, die fluidische Probe in ein Probenaufnahmevolumen in einer Richtung einzuziehen, die einer anderen Richtung entgegengesetzt ist, entlang welcher die Probe in den Haupt-Flusspfad injiziert wird. Auf diese Weise können unerwünschte Dispersionseffekte reduziert werden.

Zur Realisierung eines Injektors gemäß einem exemplarischen Ausführungsbeispiel kann es ausreichend sein, nur ein Hochdruck-Fluidventil zu implementieren, das vorzugsweise als Rotorventil mit einer Rotorkomponente und einer Statorkomponente ausgebildet werden kann.

Besonders bevorzugt ist es, die zu injizierende fluidische Probe bzw. das zu injizierende Lösungsmittel zum Beispiel unter Verwendung einer Dosierpumpe vorzukomprimieren, bevor die fluidische Verbindung zu dem Haupt-Flusspfad hergestellt wird. Bevorzugt erfolgt dies mit derselben Apparatur, welche die Probe aufgezogen hat (alternativ ist es aber auch möglich, hierfür eine zusätzliche Apparatur vorzusehen). Die Probe kann gemäß einem Ausführungsbeispiel in jedem Fall zwangsläufig komprimiert werden, bevor sie injiziert wird.

Das Abführen der mobilen Phase und das Injizieren der fluidischen Probe bzw. des Lösungsmittels kann mit Vorteil mittels einer einzigen Pumpe durchgeführt werden, die gekoppelte Kolben aufweisen kann. Ein Ausführungsbeispiel mit gekoppelten Kolben ist mit Vorteil annähernd kraftneutral betreibbar, sobald die beiden Kolbenkammern gleichen Druckverhältnissen ausgesetzt werden. Es ist auch möglich, einen einzigen Kolben in einer einzigen Kolbenpumpe vorzusehen, der unter Verwendung von mindestens zwei getrennten Pumpkammern in einem Push-Pull-Betrieb betrieben werden kann. Alternativ ist auch ein konzertierter Betrieb mehrerer unterschiedlicher Pumpen möglich.

Die fluidische Probe kann in ein Probenaufnahmevolumen des Injektors eingebracht werden, indem der Injektor mit einer Nadel-Sitz-Konfiguration implementiert wird. Alternativ kann ein Probenbehälter auch direkt mit dem Injektor fluidisch gekoppelt werden.

Unabhängig von Lösungsmitteln, die in dem analytischen Haupt-Flusspfad verwendet werden, kann die fluidische Probe mit nur marginalem Einfluss des Lösungsmittels eingeleitet werden, das zum Verdünnen der fluidischen Probe verwendet werden kann. Es ist also insbesondere möglich, fluidische Probe einzubringen, auch wenn ein starkes Probenlösemittel vorliegt.

Exemplarische Ausführungsbeispiele haben signifikante Vorteile: Die beschriebene Konfiguration des Injektors erlaubt es, einen Probenpfad (zum Beispiel aufweisend Nadel, Sitz und Probenaufnahmevolumen) aus dem Haupt-Flusspfad mit dem Fluidantrieb und der Probentrenneinrichtung auszuschließen. Die Injektionsgeschwindigkeit ist einstellbar und kann insbesondere als Methodenparameter implementiert werden.

Ein weiterer Vorteil exemplarischer Ausführungsbeispiele kann darin gesehen werden, dass abhängig von der Flussrate einer Dosierpumpe die Probe fokussiert werden kann. Außerdem kann ein injiziertes Volumen unabhängig von einem abgeführten Volumen variiert werden. Der Probenpfad kann vorkomprimierbar ausgebildet werden. Durch ein Vorkomprimieren des Probenpfads können Druckfluktuationen aufgrund des Injektionsprozesses annähernd auf Null reduziert werden. Die Injektorarchitektur gemäß exemplarischen Ausführungsbeispielen kann wahlweise mit oder ohne Nadelarchitektur realisiert werden. Es ist auch möglich, mit einem einzigen Einziehen von fluidischer Probe eine Mehrzahl von Probeninjektionen durchzuführen (insbesondere gemäß dem "Feed Injection"-Prinzip). Außerdem sind Injektionen in kurzen Zeitabständen möglich (zum Beispiel zum Überwachen einer (zum Beispiel chemischen oder biologischen) Reaktion). Eine solche Reaktion kann zum Beispiel in einem Probenaufnahmevolumen stattfinden. Ein als Ergebnis einer solchen Reaktion erhaltenes Fluid kann ganz oder teilweise in den Haupt-Flusspfad zwischen Fluidantrieb und Probentrenneinrichtung eingeleitet werden. Wenn, wie oben beschrieben, eine Spülfunktion implementiert wird, kann unerwünschte Probenverschleppung besonders wirksam unterdrückt werden. Ferner ist das Injektionsvolumen im Wesentlichen frei und unbegrenzt einstellbar, je nach Größe eines Probenaufnahmevolumens.

**Figur 1** zeigt ein HPLC-System als Beispiel für ein Probentrenngerät 10 mit einer damit gekoppelten Steuervorrichtung 70 gemäß einem exemplarischen Ausführungsbeispiel der Erfindung.

Figur 1 zeigt den prinzipiellen Aufbau eines HPLC-Systems als Beispiel für ein als Probentrenngerät 10 ausgebildetes Messgerät, wie es zum Beispiel zur Flüssigkeitschromatographie verwendet werden kann. Eine Fluidpumpe als Fluidantrieb 20, der mit Lösungsmitteln aus einer Versorgungseinheit 25 versorgt wird, treibt eine mobile Phase durch eine Probentrenneinrichtung 30 (wie zum Beispiel eine chromatographische Säule), die eine stationäre Phase beinhaltet. Ein Entgaser 27 kann die Lösungsmittel entgasen, bevor diese dem Fluidantrieb 20 zugeführt werden. Eine Probenaufgabeeinheit, die auch als Injektor 40 bezeichnet wird und ein schaltbares Fluidventil 90 aufweist, ist zwischen der Fluidpumpe 20 und der Trenneinrichtung 30 angeordnet, um eine Probenflüssigkeit in den fluidischen Trennpfad einzubringen. Die stationäre Phase der Probentrenneinrichtung 30 ist passend gewählt und dazu vorgesehen, Komponenten der Probe zu separieren. Ein Detektor 50 mit einer Flusszelle detektiert separierte Komponenten der Probe, und ein Fraktionierungsgerät kann dazu vorgesehen werden, separierte Komponenten der Probe in dafür vorgesehene Behälter auszugeben. Nicht mehr benötigte Flüssigkeiten können in einen Abflussbehälter 60 ausgegeben werden.

Die Steuervorrichtung 70 steuert die einzelnen Komponenten 20, 25, 27, 30, 40, 50, 60 des Probentrenngeräts 10.

Wie bereits angesprochen, dient der Injektor 40 zum Injizieren einer fluidischen Probe in eine mobile Phase. Ein Haupt-Flusspfad 100 des Injektors 40 ist zwischen dem Fluidantrieb 20 und der Probentrenneinrichtung 30 angeordnet und muss gemäß einem exemplarischen Ausführungsbeispiel der Erfindung im Betrieb nie unterbrochen werden. Der Fluidantrieb 20 dient zum Antreiben der mobilen Phase. Die Probentrenneinrichtung 30 fungiert zum Trennen der in die mobile Phase injizierten fluidischen Probe.

Eine in Figur 1 schematisch dargestellte Abführeinrichtung 104 des Injektors 40 ist zum Abzweigen einer Menge (zum Beispiel eines bestimmten Volumens) der mobilen Phase aus dem Haupt-Flusspfad 100 konfiguriert. Bei der dargestellten Ausführungsform wird die abgezweigte mobile Phase einem Wasteanschluss 131 zugeführt. Eine schematisch dargestellte Zuführeinrichtung 102 des Injektors 40 ist zum Zuführen einer Menge (zum Beispiel eines bestimmten Volumens) der fluidischen Probe in den Haupt-Flusspfad 100 simultan mit dem Abführen der vorbestimmten Menge der mobilen Phase aus dem Haupt-Flusspfad 100 ausgebildet. Die Steuereinrichtung 70 synchronisiert bzw. steuert die Zuführeinrichtung 102 und die Abführeinrichtung 104 sowie das Fluidventil 90 vorzugsweise so an, dass das abgezweigte Volumen der mobilen Phase gerade dem zugeführten Volumen der fluidischen Probe entspricht. Damit kann ein zusätzlicher Fluss in dem Haupt-Flusspfad 100 infolge des Injizierens der fluidischen Probe durch die abgeführte mobile Phase gerade kompensiert oder ausgeglichen werden. Wenn eine Flussrate der abgeführten mobilen Phase einer Flussrate der zugeführten fluidischen Probe entspricht, bleibt beim Injizieren der fluidischen Probe in den Haupt-Flusspfad 100 außerhalb des Injektors 40 die Flussrate in dem Haupt-Flusspfad 100 unverändert. Auf diese Weise ist es möglich, Drucksprünge, Oszillationen im Druck und andere Artefakte infolge des Vorgangs des Injizierens der fluidischen Probe stark zu unterdrücken oder sogar ganz zu vermeiden. Ein chromatographisches Trennergebnis kann dann mit hoher Störungsfreiheit und Genauigkeit erhalten werden. Alternativ zum beschriebenen vollständigen Kompensieren des zugeführten Fluidvolumens durch das abgeführte Fluidvolumen kann auch ein nur teilweises Kompensieren des zugeführten Fluidvolumens durch das abgeführte Fluidvolumen erfolgen (was als Unterkompensieren bzw. Überkompensieren bezeichnet werden kann und ebenfalls zu einer zumindest teilweisen Unterdrückung der beschriebenen Artefakte eingesetzt werden kann).

**Figur 2** zeigt einen Injektor 40 für ein Probentrenngerät 10 gemäß einem exemplarischen Ausführungsbeispiel der Erfindung. Eine Unveränderbarkeit der Flussrate ist bei diesem Ausführungsbeispiel für einen Teil des Haupt-Flusspfades 100 außerhalb des Abschnitts zwischen Bezugszeichen 108 und 106 gegeben.

Der Injektor 40 gemäß Figur 2 weist eine hier als fluidischer T-Punkt ausgebildete fluidische Verzweigungsstelle 108 in dem Haupt-Flusspfad 100 auf. Mobile Phase, die von dem Fluidantrieb 20 gemäß Figur 2 von links nach rechts gefördert wird, wird an der Verzweigungsstelle 108 zum Teil in Richtung der Probentrenneinrichtung 30 geführt und zu einem anderen Teil aus dem Haupt-Flusspfad 100 abgeführt. Es kommt an der fluidischen Verzweigungsstelle 108 also zu einer Aufspaltung des fluidischen Flusses der mobilen Phase in zwei getrennte Teilflüsse.

Bei dem Injektor 40 gemäß Figur 2 ist ferner eine hier ebenfalls als fluidischer T-Punkt ausgebildete fluidische Vereinigungsstelle 106 in dem Haupt-Flusspfad 100 vorgesehen. An der fluidischen Vereinigungsstelle 106 werden zugeführte fluidische Probe einerseits und die nicht an der fluidischen Verzweigungsstelle 108 aus dem Haupt-Flusspfad 100 abgeführte mobile Phase andererseits als fluidische Teilflüsse zu einem gemeinsamen Fluss vereinigt, der zu der Probentrenneinrichtung 30 fließt.

Figur 2 zeigt außerdem, dass eine erste Kolbenpumpe 110 zum Zuführen der fluidischen Probe zu dem Haupt-Flusspfad 100 und eine zweite Kolbenpumpe 112 zum Abführen der mobilen Phase aus dem Haupt-Flusspfad 100 bereitgestellt sind. Mit Bezugszeichen 189 ist in Figur 2 eine mechanische Kopplung zwischen der ersten Kolbenpumpe 110 und der zweiten Kolbenpumpe 112 dargestellt. Menge und Geschwindigkeit des Zuführens bzw. Abführens des jeweiligen Fluids werden durch die Geschwindigkeit der Bewegung des jeweiligen Kolbens der ersten Kolbenpumpe 110 bzw. der zweiten Kolbenpumpe 112 eingestellt. Zu diesem Zweck steuert die Steuereinrichtung 70 beide Kolbenpumpen 110, 112 zum Vollführen eines synchronisierten Betriebs. Anders ausgedrückt sind die erste Kolbenpumpe 110 und die zweite Kolbenpumpe 112 miteinander aufgrund der gemeinsamen Steuerung durch die Steuereinrichtung 70 derart wirkgekoppelt, dass deren Kolbenbewegungen aufeinander abgestimmt sind. Die gegenwärtigen Bewegungsrichtungen der jeweiligen Kolben (entsprechend einem Injektionsvorgang) der ersten Kolbenpumpe 110 und der zweiten Kolbenpumpe 112 sind in Figur 2 durch Pfeile 133 bzw. 135 dargestellt.

Wie in Figur 2 dargestellt, ist bei diesem Ausführungsbeispiel der Haupt-Flusspfad 100 zwischen den Fluidantrieb 20 und die Probentrenneinrichtung 30 derart fluidisch eingekoppelt, dass der Fluss zwischen dem Fluidantrieb 20 und der Probentrenneinrichtung 30 im Betrieb des Probentrenngeräts 10 ununterbrochen aufrechterhalten bleibt, und zwar auch während des Einleitens der fluidischen Probe aus einem (beispielsweise die Zuführeinrichtung 102 teilweise enthaltenden) Zuführ-Flusspfad 187 in den Haupt-Flusspfad 100 und des Ableitens eines Teils der mobilen Phase aus dem Haupt-Flusspfad 100 in einen (beispielsweise die Abführeinrichtung 104 teilweise enthaltenden) Abführ-Flusspfad 185. Eine nicht nur ununterbrochene, sondern vorzugsweise auch konstante Flussrate wird durch das definierte Abführen eines Teils der mobilen Phase aus dem Haupt-Flusspfad 100 erreicht, deren Volumen vorzugsweise gerade dem Volumen der zugeführten fluidischen Probe entspricht.

**Figur 3** zeigt einen Injektor 40 für ein Probentrenngerät 10 gemäß einem anderen exemplarischen Ausführungsbeispiel der Erfindung.

Figur 3 zeigt ein Probenaufnahmevolumen 120, das auch als "Sample Loop" bezeichnet werden kann, und das zum Aufnehmen einer vorbestimmten Menge der fluidischen Probe eingesetzt werden kann. Das Ausführungsbeispiel gemäß Figur 3 unterscheidet sich von jenem gemäß Figur 2 insbesondere auch dadurch, dass bei dem Injektor 40 gemäß Figur 3 nur eine einzige Kolbenpumpe 110 bereitgestellt ist, die sowohl das Zuführen der fluidischen Probe in den Haupt-Flusspfad 100 als auch das Abführen mobiler Phase aus den Haupt-Flusspfad 100 bewirkt. Die einzige Kolbenpumpe 110 hat einen verschiebbaren Kolben 114, dessen Position in einer Kolbenkammer 139 definiert, welche Teilvolumina ein Kolbenkammerabschnitt 137 auf einer Seite des Kolbens 114 bzw. ein anderer Kolbenkammerabschnitt 141 auf einer anderen gegenüberliegenden Seite des Kolbens 114 einnehmen. Die Summe der Teilvolumina des Kolbenkammerabschnitts 137 und des anderen Kolbenkammerabschnitts 141 ist dabei stets konstant. Dabei dient der Kolbenkammerabschnitt 137 zum Aufnehmen von abgezweigter mobiler Phase und der andere Kolbenkammerabschnitt 141 zum Aufnehmen von zuzuführender fluidischer Probe. Der Kolben 114 kann, gesteuert durch die Steuereinrichtung 70, in definierter Weise verfahren werden. Wird gemäß Figur 3 der Kolben 114 von links nach rechts verfahren, zieht der Kolben 114 mobile Phase von der fluidischen Verzweigungsstelle 108 in den Kolbenkammerabschnitt 137 und schiebt gleichzeitig fluidische Probe aus dem anderen Kolbenkammerabschnitt 141 oder aus dem Probenaufnahmevolumen 120 in Richtung hin zu der fluidischen Vereinigungsstelle 106. Somit ist gemäß Figur 3 zum Zuführen der fluidischen Probe und zum Abführen der mobilen Phase die gemeinsame Kolbenpumpe 110 vorgesehen und eingerichtet, in einem Push-Pull-Betrieb simultan das Zuführen der fluidischen Probe und das Abführen der mobilen Phase zu bewerkstelligen. Der Injektor 40 gemäß Figur 3 kann daher sowohl besonders kompakt ausgestaltet werden als auch steuerungstechnisch einfach betrieben werden.

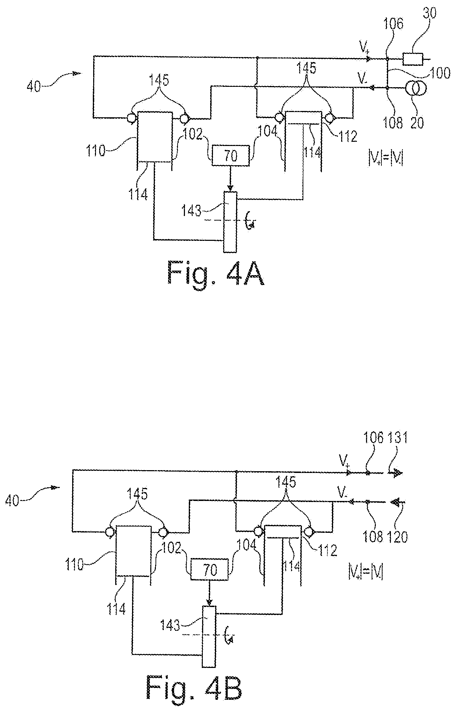

Optionale und in Figur 3 nicht eingezeichnete Rückschlagventile (siehe Bezugszeichen 145 in Figur 4A und Figur 4B) in den Fluidleitungen im Pumpenkopf, welche die fluidische Verzweigungsstelle 108 mit der Kolbenpumpe 110 und die Kolbenpumpe 110 mit der fluidischen Vereinigungsstelle 106 verbinden, können implementiert werden, um einen fluidischen Einwegfluss sicherstellen und einen unerwünschten Fluss in einer entgegengesetzten Richtung unterbinden. Weiterhin ist es möglich, die Kolbenkammer 139 zweiteilig zu gestalten, sodass ein Teil des einen gemeinsamen Kolbens 114 zwischen den beiden Teilkammern (siehe Bezugszeichen 137, 141) zumindest teilweise frei liegt.

**Figur 4A** und **Figur 4B** zeigen einen Injektor 40 für ein Probentrenngerät 10 gemäß einem anderen exemplarischen Ausführungsbeispiel der Erfindung. Fluidische Probe kann aus einem nicht dargestellten Behälter gezogen werden (siehe Bezugszeichen 118 in Figur 7). Figur 4A entspricht einem Zuführen einer fluidischen Probe von einem Probenaufnahmevolumen (siehe Bezugszeichen 120 in Figur 7). Figur 4B entspricht einem Ziehen von fluidischer Probe in ein Probenaufnahmevolumen. Figur 4B zeigt einen Wasteanschluss 131. Die gezeigten beiden Kolbenpumpen 110, 112 sind ausgebildet, unterbrechungsfrei über eine beliebige Anzahl von Kolbenzyklen hinweg kontinuierlich betreibbar zu sein.

In Figur 4A und Figur 4B ist dargestellt, dass die beiden Kolben 114 der beiden Kolbenpumpen 110, 112 mittels eines Kopplungsgliedes 143 (zum Beispiel eine Exzenterscheibe) derart wirkgekoppelt sind, dass die Bewegung der Kolben 114 eine feste Phasenbeziehung zueinander aufweist. Figur 4A und Figur 4B zeigen diverse Rückschlagventile 145, die eine Flussrichtung der diversen Fluide bestimmen.

In Figur 4A und Figur 4B wird der abgeführte Fluss mit V₋ bezeichnet, wohingegen der zugeführte Fluss mit V+ bezeichnet wird. Bevorzugt wird der Injektor 40 gemäß Figur 4A und Figur 4B derart betrieben, dass die Beziehung gilt: | V₋| = | V₊|, da dann der zugeführte Fluss vom abgeführten Fluss genau kompensiert wird und das Injizieren der fluidischen Probe in den Haupt-Flusspfad 100 daher flussneutral durchgeführt werden kann. Die Volumina der Kolbenkammern der Kolbenpumpen 110, 112 sowie die Hübe der Kolben 114 der Kolbenpumpen 110 können identisch eingestellt werden, um die genannte Beziehung zu erfüllen.

Es sei erwähnt, dass es in den Ausführungsbeispielen von Figur 2 bis Figur 4B (insbesondere Figur 3 und Figur 4A und Figur 4B) möglich ist, vor dem Injizieren der Probe eine langsame Bewegung des Kolbens bzw. der Kolben zur Verkleinerung des Teilvolumens des Kolbenkammerabschnitts 141 bzw. des Volumens im Zylinder der Kolbenpumpe 110 zwecks Vorkompression der Probe auszuführen. Dadurch wird ein Teilvolumen (Kompressionsvolumen) der mobilen Phase zwar aus dem Pfad der Kolbenpumpe 110 unkompensiert entnommen, die Störung bleibt aber dabei sehr gering, weil die Entnahme nur langsam geschieht (konträr zu einem schlagartigen Zuschalten und einer schlagartigen Kompression der Probe).

**Figur 5** zeigt einen Injektor 40 für ein Probentrenngerät 10 gemäß einem exemplarischen Ausführungsbeispiel der Erfindung. Der Betriebszustand gemäß Figur 5 bezieht sich auf die hydraulischen Verbindungen während des Einleitens einer fluidischen Probe in den Haupt-Flusspfad 100.

Gemäß Figur 5 weist der Injektor 40 ein rotatorisches Fluidventil 90 auf. Das Fluidventil 90 ist aus einer ortsfesten Statorkomponente und einer zu rotierenden Rotorkomponente zusammengesetzt. Die Statorkomponente weist Ports 147 als fluidische Anschlüsse auf. Darüber hinaus weist die Statorkomponente auch eine statische Fluidleitung 149 auf, die in dem dargestellten Ausführungsbeispiel als Nut ausgebildet ist. Von mehreren rotierbaren und dadurch schaltbaren Fluidleitungen 151 der Rotorkomponente ist in Figur 5 nur eine dargestellt, die anderen sind zum Beispiel in Figur 7 gezeigt. Das dargestellte Fluidventil 90 integriert in seinem Inneren unter anderem einen Teil des Haupt-Flusspfads 100 in Form der als Nut ausgebildeten statischen Flutleitung 149.

In einem fluidischen Pfad, der das in Figur 5 dargestellte Rückschlagventil 145' enthält, ist eine fluidische Restriktion R2 gebildet. Eine Federvorspannung des Rückschlagventils 145' legt fest, ab welchem Fluiddruck mobile Phase durch den Pfad mit der fluidischen Restriktion R2 fließen kann. Mit anderen Worten soll das Rückschlagventil 145' bei einer Krafteinwirkung unterhalb eines einstellbaren Schwellwerts einen passiven Fluss verhindern. Eine Alternative der Realisierung des Rückschlagventils 145' als federgespanntes Rückschlagventil ist zum Beispiel die Implementierung eines aktiven Schalters. Die statische Fluidleitung 149 hat eine andere fluidische Restriktion R1, wobei gemäß Figur 5 die Beziehung gilt: R2>>R1. Dies bedeutet, dass ein Großteil der mobilen Phase, die von dem Fluidantrieb 20 bereitgestellt wird, durch die statische Fluidleitung 149 und von dort weiter entlang des Haupt-Flusspfads 100 zu der Probentrenneinrichtung 30 fließt, wohingegen nur ein geringerer Anteil dieser mobilen Phase durch die Restriktion R2 zu der Kolbenpumpe 110 fließt. Mit anderen Worten teilt sich die mobile Phase bei Bezugszeichen 177 auf die beiden genannten fluidische Pfade entsprechend der Werte der hydraulischen Widerstände R1, R2 auf. Der durch die fluidische Restriktion R2 fließende Teil der mobilen Phase ist die bezugnehmend auf Figur 1 bis Figur 4B beschriebene abgeführte mobile Phase zum zumindest teilweise Kompensieren der zugeführten fluidischen Probe, die bei Bezugszeichen 179 zugeführt werden kann.

**Figur 6** zeigt einen Injektor 40 für ein Probentrenngerät 10 gemäß einem anderen exemplarischen Ausführungsbeispiel der Erfindung.

Bei diesem Ausführungsbeispiel wird die abzuführende mobile Phase nicht mittels der Kolbenpumpe 110 abgelassen bzw. eingelassen, sondern lediglich passiv in einen fluidischen Pfad 153 mit einer bestimmten fluidischen Restriktion R2 abgezweigt und über einen Wasteanschluss 131 abgeführt.

**Figur 7** zeigt einen Injektor 40 für ein Probentrenngerät 10 gemäß einem exemplarischen Ausführungsbeispiel der Erfindung.

Das Fluidventil 90 gemäß Figur 7 kann zum Zuführen der fluidischen Probe von einer Probenquelle 118 in den Haupt-Flusspfad 100 geschaltet werden. Ferner weist der Injektor 40 gemäß Figur 7 ein mit dem Fluidventil 90 über zwei Ports 147 fluidisch gekoppeltes Probenaufnahmevolumen 120 ("Sample Loop") auf. Zum Beispiel kann das Probenaufnahmevolumen 120 ein Fluid mit einem Volumen in einem Bereich zwischen 10 ml und 500 ml aufnehmen. Das Fluidventil 90 kann derart geschaltet werden, dass nach Aufnehmen der fluidischen Probe von der Probenquelle 118 in das Probenaufnahmevolumen 120 mittels Schaltens des Fluidventils 90 die in dem Probenaufnahmevolumen 120 aufgenommene fluidische Probe dem Haupt-Flusspfad 100 zugeführt wird. Eine Konditionierflüssigkeit 155 (zum Beispiel ein Verdünnungsmittel oder eine Spüllösung) ist in einem entsprechenden Flüssigkeitsbehälter 157 bereitgestellt und mit einem Port 147 des Fluidventils 90 fluidisch gekoppelt.

Darüber hinaus weist der Injektor 40 gemäß Figur 7 mit Vorteil eine Vorkomprimiereinrichtung 122 auf, die eingerichtet ist, das Probenaufnahmevolumen 120 vor Schalten in den Haupt-Flusspfad 100 vorzukomprimieren. Gemäß Figur 7 ist die Vorkomprimiereinrichtung 122 mittels einer entsprechend angesteuerten Kolbenpumpe 110 realisiert, die zum Vorkomprimieren des Probenaufnahmevolumens 120 und zum Zuführen der fluidischen Probe in den Haupt-Flusspfad 100 betrieben werden kann.

Um fluidische Probe in den Haupt-Flusspfad 100 einzuleiten, kann das Fluidventil 90 derart geschaltet werden, dass die einzige als Radialnut ausgebildete Fluidleitung 151 um 180° gegenüber der Ventilstellung gemäß Figur 7 gedreht wird. Dann fließt fluidische Probe von der Probenquelle 118 durch einen Port 147 und diese Radialnut über einen zentralen Port 147 in das Probenaufnahmevolumen 120. Danach wird das Fluidventil in die in Figur 7 dargestellte Ventilschaltung geschaltet. Die nun in dem Probenaufnahmevolumen 120 enthaltene fluidische Probe wird nun, gefördert mittels der Kolbenpumpe 110, zu dem Port 147 im Mittelpunkt des Fluidventils 90 gepumpt und gelangt durch die Radialnut und die als Port 147 ausgebildete Vereinigungsstelle 106 in den Haupt-Flusspfad 100, wo die fluidische Probe mittels des Fluidantriebs 20 gemeinsam mit mobiler Phase zu der Probentrenneinrichtung 30 gefördert wird.

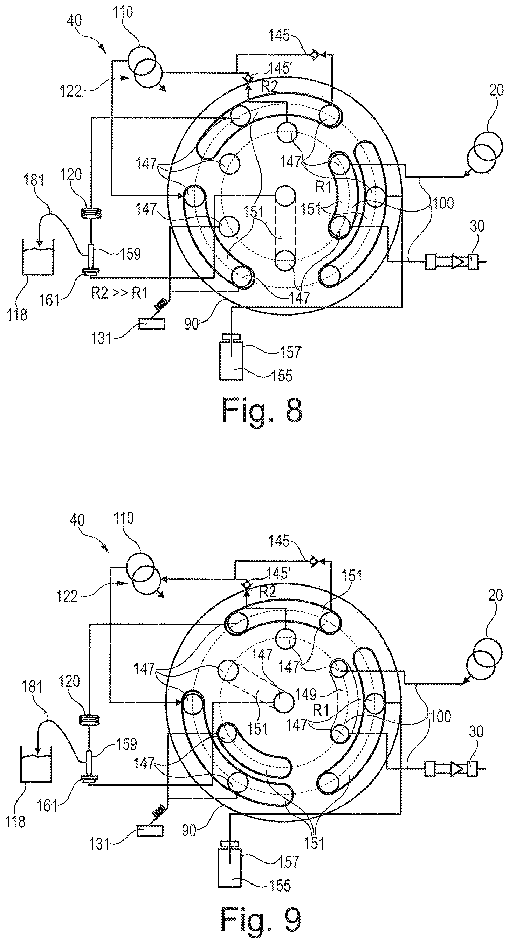

**Figur 8** zeigt einen Injektor 40 für ein Probentrenngerät 10 gemäß einem anderen exemplarischen Ausführungsbeispiel der Erfindung.

Das Ausführungsbeispiel gemäß Figur 8 unterscheidet sich von dem Ausführungsbeispiel gemäß Figur 7 insbesondere dadurch, dass gemäß Figur 8 die fluidische Probe aus dem Probenbehälter 118 in das Probenaufnahmevolumen 120 eingeführt wird, indem eine verfahrbare (siehe Bezugszeichen 181) Nadel 159 aus einem Sitz 161 herausgefahren und zum Aufnehmen der Probe in den Probenbehälter 118 eingetaucht wird. Mittels der Kolbenpumpe 110 kann dann fluidische Probe in das Probenaufnahmevolumen 120 eingesaugt werden. Nachfolgend wird die Nadel 159 wieder in den Sitz 161 zurückgefahren.

**Figur 9** zeigt einen Injektor 40 für ein Probentrenngerät 10 gemäß einem exemplarischen Ausführungsbeispiel der Erfindung. Das Ausführungsbeispiel gemäß Figur 9 ist ähnlich zu jenem gemäß Figur 8, setzt aber ein anderes Fluidventil 90 ein.

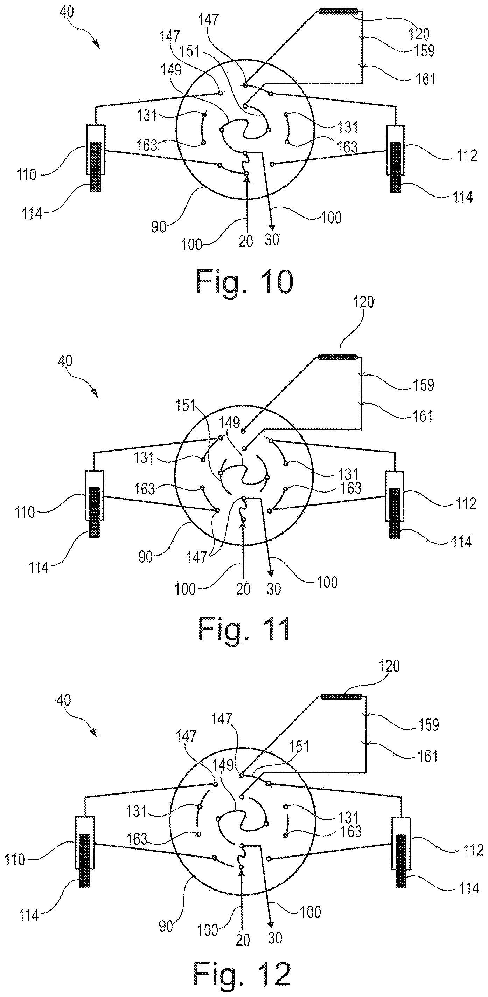

**Figur 10, Figur 11** und **Figur 12** zeigen einen Injektor 40 für ein Probentrenngerät 10 gemäß einem exemplarischen Ausführungsbeispiel der Erfindung in unterschiedlichen Schaltzuständen des zugehörigen Fluidventils 90. Bezugszeichen 163 bezeichnet einen Spülanschluss, der ebenso optional ist wie Wasteanschlüsse 131. Es ist möglich, den Injektor 40 gemäß einem exemplarischen Ausführungsbeispiel in einem dualen "Push-Pull"-Betrieb einzusetzen. In Figur 10 bis Figur 12 ist ein innerer Bereich des Fluidventils 90 als schaltbare Verbindung ausgebildet, die in der dargestellten Weise angeschlossen ist. Gekrümmte Linien in Figur 10 bis Figur 12 stellen Jumperverbindungen dar. In Figur 10 ist ein Ziehen eines Fluids und ein Injizieren dargestellt. Figur 11 bezieht sich auf ein Spülen und ein Ausstoßen. In Figur 12 ist ein Komprimieren dargestellt.

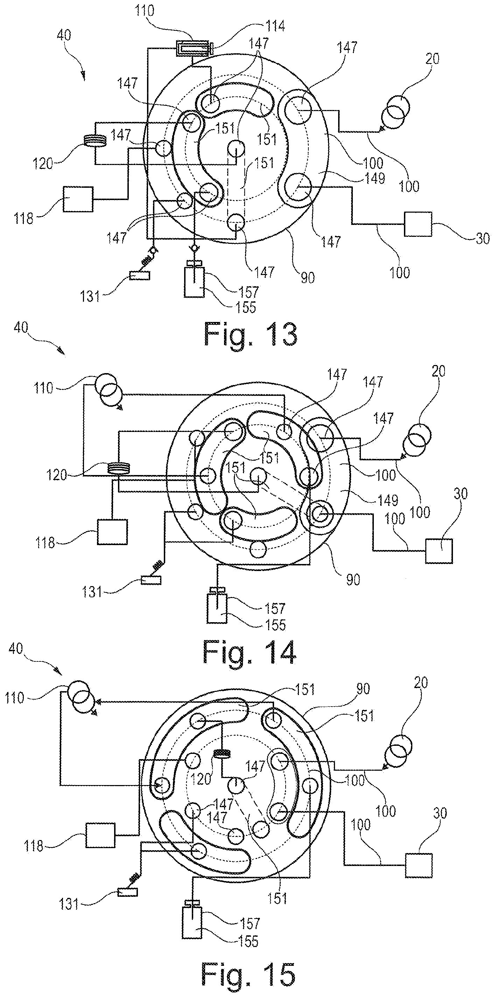

**Figur 13, Figur 14** und **Figur 15** zeigen jeweils einen Injektor 40 für ein Probentrenngerät 10 gemäß einem exemplarischen Ausführungsbeispiel der Erfindung. In Figur 13 bis Figur 15 ist dargestellt, dass Injektoren 40 gemäß exemplarischen Ausführungsbeispielen der Erfindung mit ganz unterschiedlichen Ventilkonfigurationen ausgebildet werden können.

Es sollte angemerkt werden, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

## Patentansprüche

1. Injektor (40) zum Injizieren einer fluidischen Probe, welche zu analysierende Materie enthält, in eine mobile Phase in einem Probentrenngerät (10), wobei der Injektor (40) aufweist:
einen Haupt-Flusspfad (100) zwischen einem Fluidantrieb (20) und einer Probentrenneinrichtung (30), wobei der Fluidantrieb (20) zum Antreiben der mobilen Phase und die Probentrenneinrichtung (30) zum Trennen der in die mobile Phase injizierten fluidischen Probe ausgebildet ist;
eine Abführeinrichtung (104) zum Abführen einer Menge der mobilen Phase aus dem Haupt-Flusspfad (100);
eine Zuführeinrichtung (102) zum Zuführen einer Menge der fluidischen Probe und/oder eines Lösungsmittels in den Haupt-Flusspfad (100);
wobei die abgeführte Menge und die zugeführte Menge einander zumindest teilweise kompensieren.

2. Injektor (40) gemäß Anspruch 1, bei dem eine Flussrate der abgeführten mobilen Phase einer Flussrate der zugeführten fluidischen Probe und/oder des zugeführten Lösungsmittels entspricht.

3. Injektor (40) gemäß Anspruch 1 oder 2, wobei die Abführeinrichtung (104) passiv mit einem zuschaltbaren Restriktor (r2) ausgebildet ist.

4. Injektor (40) gemäß einem der Ansprüche 1 bis 3, aufweisend eine fluidische Vereinigungsstelle (106) in dem Haupt-Flusspfad (100), an der die zugeführte fluidische Probe und/oder das zugeführte Lösungsmittel einerseits und mittels des Fluidantriebs (20) angetriebene mobile Phase andererseits beim Zuführen als fluidische Flüsse vereinigt werden.

5. Injektor (40) gemäß einem der Ansprüche 1 bis 4, aufweisend eine fluidische Verzweigungsstelle (108) in dem Haupt-Flusspfad (100), an der die mobile Phase zumindest teilweise aus dem Haupt-Flusspfad (100) abgeführt wird, vorzugsweise an der mittels des Fluidantriebs (20) angetriebene mobile Phase zum Teil in Richtung der Probentrenneinrichtung (30) geführt wird und zu einem anderen Teil aus dem Haupt-Flusspfad (100) abgeführt wird.

6. Injektor (40) gemäß Anspruch 5, bei dem die fluidische Verzweigungsstelle (108) stromaufwärts der fluidischen Vereinigungsstelle (106) angeordnet ist.

7. Injektor (40) gemäß einem der Ansprüche 1 bis 6, aufweisend mindestens eine Pumpe (110, 112) zum Zuführen der fluidischen Probe und/oder des Lösungsmittels und/oder zum Abführen der mobilen Phase, vorzugsweise mindestens eine Kolbenpumpe (110, 112), deren Kolben (114) zum Zuführen der fluidischen Probe und/oder des Lösungsmittels und/oder zum Abführen der mobilen Phase bewegbar ist.

8. Injektor (40) gemäß Anspruch 7, bei dem zum Zuführen der fluidischen Probe und/oder des Lösungsmittels und zum Abführen der mobilen Phase eine gemeinsame Pumpe (110), vorzugsweise eine gemeinsame Kolbenpumpe (110), vorgesehen und eingerichtet ist, simultan das Zuführen der fluidischen Probe und/oder des Lösungsmittels und das Abführen der mobilen Phase zu bewerkstelligen.

9. Injektor (40) gemäß Anspruch 7 oder 8, mit einer ersten Pumpe (110), zum Zuführen der fluidischen Probe und/oder des Lösungsmittels und einer zweiten Pumpe (112), zum Abführen der mobilen Phase, wobei vorzugsweise die erste Pumpe (110) und die zweite Pumpe (112) miteinander wirkgekoppelt, vorzugsweise miteinander synchronisiert sind.

10. Injektor (40) gemäß einem der Ansprüche 1 bis 9, wobei die Zuführeinrichtung (102) ein Fluidventil (90) aufweist, das zum Zuführen der fluidischen Probe von einer Probenquelle (118) und/oder zum Zuführen des Lösungsmittels in den Haupt-Flusspfad (100) schaltbar ist.

11. Injektor (40) gemäß Anspruch 10, aufweisend ein mit dem Fluidventil (90) fluidisch gekoppeltes Probenaufnahmevolumen (120), wobei das Fluidventil (90) derart schaltbar ist, dass nach Aufnehmen der fluidischen Probe von der Probenquelle (118) in das Probenaufnahmevolumen (120) mittels Schaltens des Fluidventils (90) die in dem Probenaufnahmevolumen (120) aufgenommene fluidische Probe dem Haupt-Flusspfad (100) zuführbar ist.

12. Injektor (40) gemäß einem der Ansprüche 1 bis 11, mit einer Vorkomprimiereinrichtung (122), die eingerichtet ist, die fluidische Probe und/oder das Lösungsmittel vor dem Zuführen in den Haupt-Flusspfad (100) vorzukomprimieren.

13. Probentrenngerät (10) zum Trennen einer fluidischen Probe, wobei das Probentrenngerät (10) aufweist:
einen Fluidantrieb (20) zum Antreiben einer mobilen Phase;
eine Probentrenneinrichtung (30) zum Trennen der fluidischen Probe in der mobilen Phase; und
einen Injektor (40) gemäß einem der Ansprüche 1 bis 12 zum Injizieren der fluidischen Probe in die mobile Phase.

14. Probentrenngerät (10) gemäß Anspruch 13, wobei die Probentrenneinrichtung (30) als chromatographische Trenneinrichtung, vorzugsweise als Chromatographietrennsäule, ausgebildet ist.

15. Verfahren, aufweisend:
Antreiben einer mobilen Phase, welche zur Injektion einer fluidische Probe, die zu analysierende Materie enthält, vorgesehen ist, in einem Haupt-Flusspfad (100) eines Probentrenngeräts (10) zwischen einem Fluidantrieb (20) und einer Probentrenneinrichtung (30);
Abführen einer Menge der mobilen Phase aus dem Haupt-Flusspfad (100);
Zuführen einer Menge einer fluidischen Probe und/oder eines Lösungsmittels in den Haupt-Flusspfad (100);
wobei die abgeführte Menge und die zugeführte Menge derart bemessen werden, dass sie einander zumindest teilweise kompensieren.

## Claims

1. An injector (40) for injecting a fluidic sample containing matter to be analyzed into a mobile phase in a sample separation apparatus (10), the injector (40) comprising:
a main flow path (100) between a fluid drive (20) and a sample separation device (30), the fluid drive (20) being configured to drive the mobile phase and the sample separation device (30) being configured to separate the fluidic sample injected into the mobile phase;
a discharge device (104) for discharging an amount of the mobile phase from the main flow path (100);
a supply device (102) for supplying an amount of the fluidic sample and/or a solvent into the main flow path (100);
wherein the discharged amount and the supplied amount at least partially compensate each other.

2. The injector (40) according to claim 1, wherein a flow rate of the discharged mobile phase corresponds to a flow rate of the supplied fluidic sample and/or the supplied solvent.

3. The injector (40) according to claim 1 or 2, wherein the discharge device (104) is configured passively with a connectable restrictor (r2).

4. The injector (40) according to one of claims 1 to 3, comprising a fluidic combining point (106) in the main flow path (100), at which the supplied fluidic sample and/or the supplied solvent on the one hand and the mobile phase driven by means of the fluid drive (20) on the other hand are combined as fluidic flows during supply.

5. The injector (40) according to one of claims 1 to 4, comprising a fluidic branching point (108) in the main flow path (100), at which the mobile phase is at least partially discharged from the main flow path (100), preferably at which the mobile phase driven by means of the fluid drive (20) is partially guided in the direction of the sample separation device (30) and is partially discharged from the main flow path (100).

6. The injector (40) according to claim 5, wherein the fluidic branching point (108) is arranged upstream of the fluidic combining point (106).

7. The injector (40) according to one of claims 1 to 6, comprising at least one pump (110, 112) for supplying the fluidic sample and/or the solvent and/or for discharging the mobile phase, preferably at least one piston pump (110, 112), the piston (114) of which is movable for supplying the fluidic sample and/or the solvent and/or for discharging the mobile phase.

8. The injector (40) according to claim 7, wherein a common pump (110), preferably a common piston pump (110), is provided for supplying the fluidic sample and/or the solvent and for discharging the mobile phase and is configured to simultaneously effect the supply of the fluidic sample and/or the solvent and the discharge of the mobile phase.

9. The injector (40) according to claim 7 or 8, comprising a first pump (110) for supplying the fluidic sample and/or the solvent and a second pump (112) for discharging the mobile phase, wherein preferably the first pump (110) and the second pump (112) are operatively coupled to each other, preferably synchronized with each other.

10. The injector (40) according to one of claims 1 to 9, wherein the supply device (102) comprises a fluid valve (90) which is switchable for supplying the fluidic sample from a sample source (118) and/or for supplying the solvent into the main flow path (100).

11. The injector (40) according to claim 10, comprising a sample receiving volume (120) fluidically coupled to the fluid valve (90), wherein the fluid valve (90) is switchable such that after receiving the fluidic sample from the sample source (118) into the sample receiving volume (120) by switching the fluid valve (90), the fluidic sample received in the sample receiving volume (120) can be supplied to the main flow path (100).

12. The injector (40) according to one of claims 1 to 11, comprising a precompressing device (122) which is configured to pre-compress the fluidic sample and/or the solvent before supplying into the main flow path (100).

13. A sample separation apparatus (10) for separating a fluidic sample, the sample separation apparatus (10) comprising:
a fluid drive (20) for driving a mobile phase;
a sample separation device (30) for separating the fluidic sample in the mobile phase; and
an injector (40) according to one of claims 1 to 12 for injecting the fluidic sample into the mobile phase.

14. The sample separation apparatus (10) according to claim 13, wherein the sample separation device (30) is configured as a chromatographic separation device, preferably as a chromatographic separation column.

15. A method comprising:
driving a mobile phase, which is provided for injection of a fluidic sample containing matter to be analyzed, in a main flow path (100) of a sample separation apparatus (10) between a fluid drive (20) and a sample separation device (30);
discharging an amount of the mobile phase from the main flow path (100);
supplying an amount of a fluidic sample and/or a solvent into the main flow path (100);
wherein the discharged amount and the supplied amount are dimensioned such that they at least partially compensate each other.

## Revendications

1. Injecteur (40) permettant d'injecter, dans une phase mobile et dans un séparateur d'échantillons (10), un échantillon fluidique contenant de la matière à analyser, dans lequel l'injecteur (40) présente :
un trajet d'écoulement principal (100) entre un entraînement fluidique (20) et un dispositif de séparation d'échantillons (30), dans lequel l'entraînement fluidique (20) est conçu pour entraîner la phase mobile et le dispositif de séparation d'échantillons (30) est conçu pour séparer l'échantillon fluidique injecté dans la phase mobile ;
un dispositif d'évacuation (104) permettant d'évacuer une quantité de la phase mobile hors du trajet d'écoulement principal (100) ;
un dispositif d'alimentation (102) permettant d'alimenter une quantité de l'échantillon fluidique et/ou d'un solvant dans le trajet d'écoulement principal (100) ;
dans lequel la quantité évacuée et la quantité alimentée se compensent au moins partiellement.

2. Injecteur (40) selon la revendication 1, dans lequel un débit de la phase mobile évacuée correspond à un débit de l'échantillon fluidique alimenté et/ou du solvant alimenté.

3. Injecteur (40) selon la revendication 1 ou 2, dans lequel le dispositif d'évacuation (104) est conçu de manière passive avec un restricteur (r2) pouvant être activé.

4. Injecteur (40) selon l'une quelconque des revendications 1 à 3, présentant un point de réunion fluidique (106) au sein du trajet d'écoulement principal (100), au niveau duquel l'échantillon fluidique alimenté et/ou le solvant alimenté d'une part et la phase mobile entraînée par l'entraînement fluidique (20) d'autre part sont réunis sous forme de flux fluidiques lors de l'alimentation.

5. Injecteur (40) selon l'une quelconque des revendications 1 à 4, présentant un point de dérivation fluidique (108) au sein du trajet d'écoulement principal (100), au niveau duquel la phase mobile est évacuée au moins partiellement hors du trajet d'écoulement principal (100), de manière préférée au niveau duquel la phase mobile entraînée au moyen de l'entraînement fluidique (20) est alimentée pour une partie en direction du dispositif de séparation d'échantillons (30) et est évacuée pour une autre partie hors du trajet d'écoulement principal (100).

6. Injecteur (40) selon la revendication 5, dans lequel le point de dérivation fluidique (108) est situé en amont du point de réunion fluidique (106).

7. Injecteur (40) selon l'une quelconque des revendications 1 à 6, présentant au moins une pompe (110, 112) permettant d'alimenter l'échantillon fluidique et/ou le solvant et/ou permettant d'évacuer la phase mobile, de manière préférée au moins une pompe à piston (110, 112) dont le piston (114) peut être déplacé afin d'alimenter l'échantillon fluidique et/ou le solvant et/ou afin d'évacuer la phase mobile.

8. Injecteur (40) selon la revendication 7, dans lequel une pompe commune (110), de manière préférée une pompe à piston commune (110), est prévue afin d'alimenter l'échantillon fluidique et/ou le solvant et afin d'évacuer la phase mobile et est conçue pour mettre en œuvre simultanément l'alimentation de l'échantillon fluidique et/ou du solvant et l'évacuation de la phase mobile.

9. Injecteur (40) selon la revendication 7 ou 8, avec une première pompe (110) permettant d'alimenter l'échantillon fluidique et/ou le solvant et une deuxième pompe (112) permettant d'évacuer la phase mobile, dans lequel la première pompe (110) et la deuxième pompe (112) sont de manière préférée couplées activement l'une à l'autre, de manière préférée sont synchronisées l'une avec l'autre.

10. Injecteur (40) selon l'une quelconque des revendications 1 à 9, dans lequel le dispositif d'alimentation (102) présente une vanne de fluide (90) qui peut être commutée au sein du trajet d'écoulement principal (100) en vue de l'alimentation de l'échantillon fluidique à partir d'une source d'échantillon (118) et/ou en vue de l'alimentation du solvant.

11. Injecteur (40) selon la revendication 10, présentant un volume de réception d'échantillons (120) couplé de manière fluidique à la vanne de fluide (90), dans lequel la vanne de fluide (90) peut être commutée de telle manière qu'après réception de l'échantillon fluidique en provenance de la source d'échantillon (118) dans le volume de réception d'échantillons (120), l'échantillon fluidique reçu dans le volume de réception d'échantillons (120) peut être alimenté vers le trajet d'écoulement principal (100) par commutation de la vanne de fluide (90).

12. Injecteur (40) selon l'une quelconque des revendications 1 à 11, comprenant un dispositif de précompression (122) conçu pour pré-compresser l'échantillon fluidique et/ou le solvant avant l'alimentation dans le trajet d'écoulement principal (100).

13. Séparateur d'échantillons (10) permettant de séparer un échantillon fluidique, dans lequel le séparateur d'échantillons (10) présente :
un entraînement fluidique (20) permettant d'entraîner une phase mobile ;
un dispositif de séparation d'échantillons (30) permettant de séparer l'échantillon fluidique au sein de la phase mobile ; et
un injecteur (40) selon l'une quelconque des revendications 1 à 12 permettant d'injecter l'échantillon fluidique dans la phase mobile.

14. Séparateur d'échantillons (10) selon la revendication 13, dans lequel le dispositif de séparation d'échantillons (30) est conçu comme un dispositif de séparation chromatographique, de manière préférée comme une colonne de séparation par chromatographie.

15. Procédé, présentant les étapes consistant à :
entraîner une phase mobile fournie en vue de l'injection, dans un trajet d'écoulement principal (100) d'un séparateur d'échantillons (10) entre un entraînement fluidique (20) et un séparateur d'échantillons (30), d'un échantillon fluidique contenant de la matière à analyser ;
évacuer une quantité de la phase mobile hors du trajet d'écoulement principal (100) ;
alimenter une quantité d'un échantillon fluidique et/ou d'un solvant dans le trajet d'écoulement principal (100) ;
dans lequel la quantité évacuée et la quantité alimentée sont dimensionnées de telle manière qu'elles se compensent au moins partiellement.
